# EUROPEAN PATENT APPLICATION

(11) **EP 2 330 857 A1**
(43) Date of publication of application: **08.06.2011**
(21) Application number: 11159982.5
(22) Date of filing: 20.12.2006
(51) Int. Cl.: H04W 72/12

(54) **Method and apparatus for determining and communicating delay information**

(30) Priority: 22.12.2005 US 752973 P; 17.01.2006 US 333792; 08.12.2006 US 608785
(62) Divisional of application: 06848059.9
(71) Applicant: Qualcomm Incorporated, San Diego, CA 92121-1714 (US)
(72) Inventor: Park, Vincent, San Diego, CA, 92121-1714 (US); Das, Arnab, San Diego, CA, 92121-1714 (US)
(74) Representative: Wegner, Hans

(57) **Abstract**

Methods and apparatus related to determining, communicating, and/or using delay information are described. A wireless terminal determines delay information corresponding to queued information that it intends to transmit. The delay information includes a minimum time to a transmission deadline indicating a minimum amount of time remaining before information will be discarded if not transmitted. The determined delay information is communicated to a base station in a control information report. Alternatives formats for the control information report are possible including a report type conveying only delay information and a report type conveying delay information and queue backlog count information jointly coded. A base station uses received delay information received from one or more wireless terminals to efficiently schedule uplink traffic channel segments.

## Description

### FIELD OF THE INVENTION

The present invention relates to wireless communications methods and apparatus and, more particularly, to methods and apparatus related to determining, communicating, and/or using delay information.

### BACKGROUND

In a multiple access wireless communications system in which a base station schedules air link resources to wireless terminals competing for those resources, different wireless terminals, at different times may have different needs. A wireless terminal's resource needs may vary as a function of: types of applications, quality of service requirements, queued backlog, time data/information to be transmitted by the wireless terminal has been waiting in a queue, and/or data/information latency requirements. Control information about a wireless terminal reported to a base station by the wireless allows a base station's scheduler to characterize the wireless terminal's needs and weigh the wireless terminal's needs against those of other wireless terminal's competing for the air link resources, e.g., competing for uplink traffic channel segments. Typically, some data/information waiting to be transmitted by a wireless terminal is delay-sensitive data/information, e.g., voice traffic, gaming traffic, etc. It would be beneficial if methods and apparatus provided for determining, reporting, communicating, and/or using delay information. A base station receiving delay sensitive information, e.g., delay sensitive information associated with uplink transmission backlog, could benefit from such knowledge in performing scheduling. More efficient scheduling methods and apparatus can lead to better a quality of service for users, higher user satisfaction and/or higher overall throughput.

### SUMMARY

Various embodiments are directed to wireless communications methods and apparatus related to determining, communicating, and/or using delay information. For example, delay information may corresponding to uplink traffic waiting to be transmitted in a wireless terminal; the delay information is determined by a wireless terminal and communicated to a base station, where the received delay information is used to more efficiently schedule air link resources, e.g., uplink traffic channel segments.

Various embodiments are directed to a method of operating a wireless terminal including determining delay information corresponding to data to be transmitted, said delay information including at least a minimum delay to a transmission deadline; and communicating at least some of said determined delay information to a base station.

In some such embodiments, the minimum delay to a transmission deadline is a first minimum delay to a first transmission deadline, said first minimum delay corresponding to data to be transmitted by the wireless terminal that has been waiting in a first transmission queue.

Some embodiments are directed to apparatus such as a wireless terminal, e.g., mobile node, including: a transmission delay determination module for determining delay information corresponding to data to be transmitted, said delay information including at least a minimum delay to a transmission deadline; and a wireless transmitter module for transmitting at least some delay information determined by said delay determination module.

In some embodiments determined delay information corresponding to queued uplink traffic is communicated in uplink control information reports. Some types of control information reports have a format such as to communicate delay information exclusively. Other types of control information reports are formatted to convey queue backlog count information and corresponding delay information, e.g., jointly coded. Some embodiments, implement a plurality of different possible report dictionaries facilitating alternative reporting scenarios for communicating delay information.

While various embodiments have been discussed in the summary above, it should be appreciated that not necessarily all embodiments include the same features and some of the features described above are not necessary but can be desirable in some embodiments. Numerous additional features, embodiments and benefits of the present invention are discussed in the detailed description which follows.

### BRIEF DESCRIPTION OF THE FIGURES

Figure 1 is drawing of an exemplary wireless communications system implemented in accordance with various embodiments.

Figure 2 is a drawing of an exemplary wireless terminal, e.g., mobile node, in accordance with various embodiments.

Figure 3 is a drawing of another exemplary wireless terminal, e.g., mobile node, in accordance with various embodiments.

Figure 4 is a drawing of an exemplary base station in accordance with various embodiments.

Figure 5 is a drawing of a flowchart of an exemplary method of operating a wireless terminal in accordance with various embodiments.

Figure 6 is a drawing of a flowchart of another exemplary method of operating a wireless terminal in accordance with various embodiments.

Figure 7 is a drawing of a flowchart of another exemplary method of operating a wireless terminal in accordance with various embodiments.

Figure 8 is a drawing of a flowchart of another exemplary method of operating a wireless terminal in accordance with various embodiments.

Figure 9 comprising the combination of Figure 9A, Figure 9B and Figure 9C is a drawing of a flowchart of an exemplary method of operating a base station in accordance with various embodiments.

Figure 10 is a drawing of exemplary uplink dedicated control channel (DCCH) segments in an exemplary uplink timing and frequency structure in an exemplary orthogonal frequency division multiplexing (OFDM) multiple access wireless communications system.

Figure 11 is a table listing exemplary dedicated control reports that may be communicated using the dedicated control channel segments of Figure 10.

Figure 12 is a drawing illustrating an exemplary reporting format information in an exemplary recurring time interval for a given dedicated control channel tone, e.g., corresponding to a wireless terminal.

Figure 13 is a drawing of a table describing an exemplary format of exemplary 4 bit delay report.

Figure 14 is a drawing of a table describing another exemplary format of exemplary 4 bit delay report.

Figure 15 is a drawing of a table describing an exemplary flexible report in which a wireless terminal has the opportunity to select to communicate a delay information report.

Figure 16 is a drawing of a table illustrating exemplary control factor determination as a function of previously reported control information, the control factors being used in interpreting request reports.

Figure 17 is a drawing of a table describing an exemplary 3 bit uplink request report format corresponding to an exemplary Request Dictionary A.

Figure 18 is a drawing of a table describing an exemplary 4 bit uplink request report format corresponding to the exemplary Request Dictionary A.

Figure 19 is a drawing of a table describing an exemplary 3 bit uplink request report format corresponding to an exemplary Request Dictionary B.

Figure 20 is a drawing of a table describing an exemplary 4 bit uplink request report format corresponding to the exemplary Request Dictionary B.

Figure 21 is a drawing of a table describing an exemplary 3 bit uplink Request report format corresponding to an exemplary Request Dictionary C.

Figure 22 is a drawing of a table describing an exemplary 4 bit uplink request report format corresponding to the exemplary Request Dictionary C.

Figure 23 is a drawing of a table describing an exemplary 1 bit uplink request report format.

Figure 24 is a drawing of a table describing an exemplary 4 bit uplink request report format corresponding to an exemplary Request Dictionary with reference number 0.

Figure 25 is a drawing of a table describing an exemplary 3 bit uplink request report format corresponding to the exemplary Request Dictionary with reference number 0.

Figure 26 is a drawing of a table describing an exemplary 4 bit uplink request report format corresponding to an exemplary Request Dictionary with reference number 1.

Figure 27 is a drawing of a table describing an exemplary 3 bit uplink request report format corresponding to the exemplary Request Dictionary with reference number 1.

Figure 28 is a drawing of another exemplary wireless terminal, e.g., mobile node, in accordance with various embodiments.

Figure 29 is a drawing of another exemplary base station in accordance with various embodiments.

Figure 30 comprising the combination of Figure 30A and Figure 30B is a drawing of a flowchart of an exemplary method of operating a base station in accordance with various embodiments.

### DETAILED DESCRIPTION

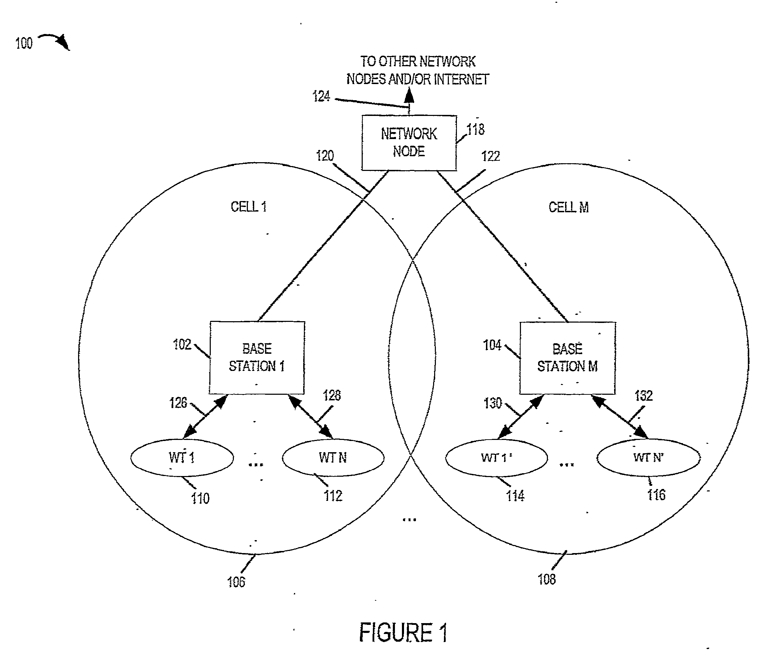

Figure 1 is drawing of an exemplary wireless communications system 100 implemented in accordance with various embodiments. Exemplary wireless communications system 100 is, e.g., an orthogonal frequency division multiple (OFDM) multiple access wireless communications system.

Exemplary wireless communications system '100 includes a plurality of base stations (base station 1 102, ..., base station M 104). Each base station (102, 104) has a corresponding wireless coverage area (cell 1 106, cell M 108), respectively. System 100 also includes network node 118 which is coupled to base stations (102, 104) via network links (120, 122), respectively. Network node 118 is also coupled to other network nodes and/or the Internet via link 124. Network links (120, 122, 124) are, e.g., fiber optic links. System 100 may also include cells with multiple sectors and/or cells using multiple carriers.

System 100 also includes a plurality of wireless terminals. At least some of the wireless terminals are mobile nodes which may move throughout the communication system. In Figure 1, wireless terminals (WT 1 110, WT N 112) are located in cell 1 106 and coupled to base station 1 102 via wireless links (126, 128), respectively. In Figure 1, wireless terminals (WT 1' 114, WT N' 116) are located in cell M 108 and coupled to base station M 104 via wireless links (130, 132), respectively. In accordance with various embodiments, at least some of the wireless terminals communicate delay information corresponding to data to be transmitted to a base station. In accordance with various embodiments, a base station performs scheduling of uplink air link resources, e.g., uplink traffic channel segments; as a function or received delay information from wireless terminals.

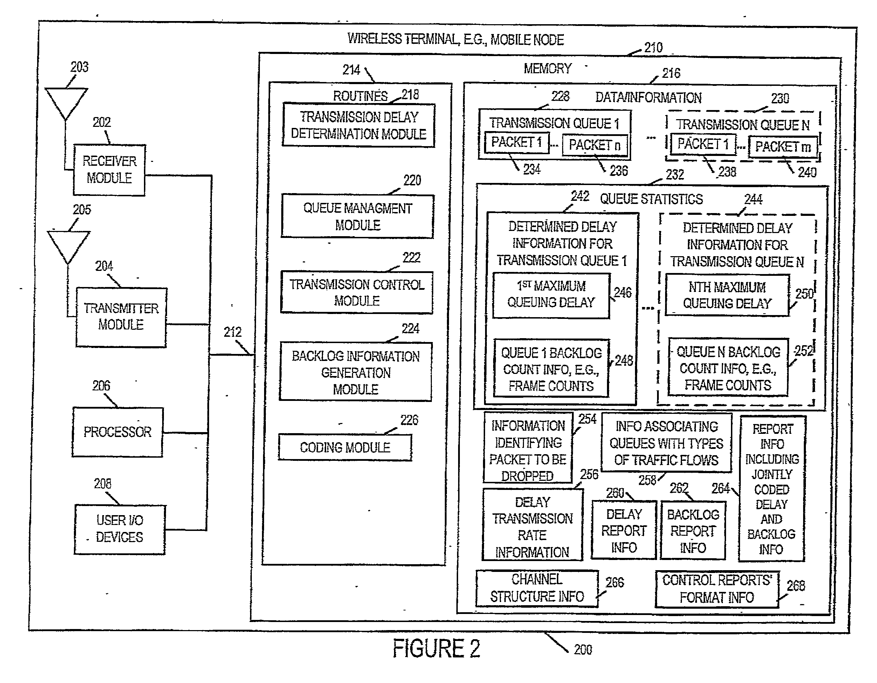

Figure 2 is a drawing of an exemplary wireless terminal 200, e.g., mobile node, in accordance with various embodiments. Exemplary wireless terminal 200 may be any of the exemplary wireless terminals (110, 112, 114, 116) of system 100 of Figure 1.

Wireless terminal 200 includes a receiver module 202, a transmitter module 204, a processor 206, user I/O devices 208, and a memory 210 coupled together via a bus 212 over which the various elements interchange data and information. Memory 210 includes routines 214 and data/information 216. The processor 206, e.g., a CPU, executes the routines 214 and uses the data/information 216 in memory 210 to control the operation of the wireless terminal 200 and implement methods.

Receiver module 202, e.g., an OFDM receiver, is coupled to receive antenna 203 via which the wireless terminal 200 receives downlink signals. Downlink signals include assignment signals including assignments of uplink communications resources, e.g., assignments of uplink traffic channel segments. Transmitter module 204, e.g., an OFDM transmitter, is coupled to transmit antenna 205, via which the wireless terminal 200 transmits uplink signals to a base station. Uplink signals include, e.g., control information reports including delay information reports, backlog information reports, and/or joint delay/backlog information reports. Uplink signals also include uplink traffic channel segment signals conveying packets of information from transmission queues. Transmitter module 204 transmits at least some delay information determined by transmission delay determination module 218. In some embodiments, transmitter module 204 transmits first and second maximum queuing delays corresponding to first and second transmission queues to a base station. In some embodiments, the same antenna is used for receiver and transmitter.

User I/O devices 208, e.g., microphone, keypad, keyboard, mouse, switches, camera, speaker, display, etc., allow a user of wireless terminal 200 to input data/information and to access output data/information. User I/O devices 208 also allow a user of wireless terminal 200 to control at least some functions of the wireless terminal.

Routines 214 include a transmission delay determination module 218, a queue management module 220, a transmission control module 222, a backlog information generation module 224, and a coding module 226. Transmission delay determination module 218 determines delay information corresponding to data to be transmitted. Queue management module 220 manages one or more transmission queues. Operations of queue management module 220 include dropping data, e.g., a packet, from a transmission queue if a queuing delay associated with the data, e.g., the packet, exceeds maximum threshold associated with the data, e.g., a staleness threshold. Transmission control module 222 controls the transmitter module 204 to transmit maximum queuing delay information. In some embodiments, the transmission control module 222 controls the transmitter 204 to transmit a first maximum queuing delay more frequently than a second maximum queuing delay, e.g., maximum queuing delay 246 corresponding to transmission queue 1 228 is controlled to be transmitted more frequently than maximum queuing delay 250 corresponding to transmission queue N 230.

Backlog information generation module 224 generates information indicating an amount of data waiting to be transmitted, e.g., queue 1 backlog count information 248. Backlog information generation module 224 also uses queue backlog count information, e.g., queue 1 backlog count information 248, to generate a backlog report corresponding to backlog report information 262. Coding module 226 performs coding operations including jointly coding backlog information, e.g., frame counts of data to be transmitted, and delay information. For example, coding module 226 jointly codes 1^{st} maximum queuing delay 246 and queue 1 backlog count information 248 into an uplink control information report corresponding to report information 264.

Data/information 216 includes one or more transmission queues (transmission queue 1 228, ..., transmission queue N 230), queue statistics 232, information identifying packet(s) to be dropped 254, delay transmission rate information 256, information associating queues with types of traffic flows 258, delay report information 260, backlog report information 262, report information including jointly coded delay and backlog information 264, channel structure information 266 and control reports' format information 268.

The transmission queues (228, 230) store data to be transmitted by the wireless terminal Transmission queue 1 228 includes a plurality of packets (packet 1 info 234, ..., packet n info 236). Transmission queue N 230 includes a plurality of packets (packet 1 info 238, ..., packet m info 240). Queue statistics 232 includes one or more sets of determined delay information for a corresponding transmission queue (determined delay information for transmission queue 1 242, ..., determined delay information for transmission queue N 244). Determined delay information for transmission queue 1 242 includes a 1^{st} maximum queuing delay 246 and transmission queue 1 backlog count information 248, e.g., frame counts of backlog for transmission queue 1. Determined delay information for transmission queue N 242 includes a Nth maximum queuing delay 250 and transmission queue N backlog count information 252, e.g., frame counts of backlog for transmission queue N.

1^{st} maximum queuing delay 246 indicates a maximum amount of time a packet in the first transmission queue 228 has been waiting to be transmitted by the wireless terminal 200. Similarly, N^{th} maximum queuing delay 250 indicates a maximum amount of time a packet in the Nth transmission queue 230 has been waiting to be transmitted by the wireless terminal 200. Queue 1 backlog information 248 indicates an amount of backlog corresponding to transmission queue 1 228, e.g., a number of frames, e.g., number of MAC frames, of backlog. Queue N backlog information 252 indicates and amount of backlog corresponding to transmission queue N 230, e.g., a number of frames, e.g., number of MAC frames, of backlog.

In some embodiments, at least some different transmission queues correspond to different traffic flows. Information 258 associates queues with types of traffic. For example, in one exemplary embodiment, transmission queue 1 228 is associated with a voice traffic flow and transmission queue N 230 is associated with a non-voice traffic flow, e.g., a gaming or other interactive traffic flow.

Information identifying a packet to be dropped 254 is an output of queue management module 220 and is used to update a transmission queue, e.g., management module 220 updates transmission queue 1 228 based on information 254. Delay transmission rate information 256, e.g., scheduling information corresponding to communicating delay information control reports and/or backlog reports including delay information, is used by transmission control module 222 to control the communication of delay information corresponding to different queues. Delay report information 260 is, e.g., information corresponding to a wireless terminal 200 generated delay information report, e.g., in a dedicated control channel reporting structure. Backlog report information 262 is, e.g., information corresponding to a wireless terminal 200 generated backlog report, e.g., in a dedicated control channel reporting structure. Report information including jointly coded delay and backlog information 264, e.g., an output of coding module 226, represents a control information report conveying both delay information and backlog information, e.g., in a dedicated control channel reporting structure.

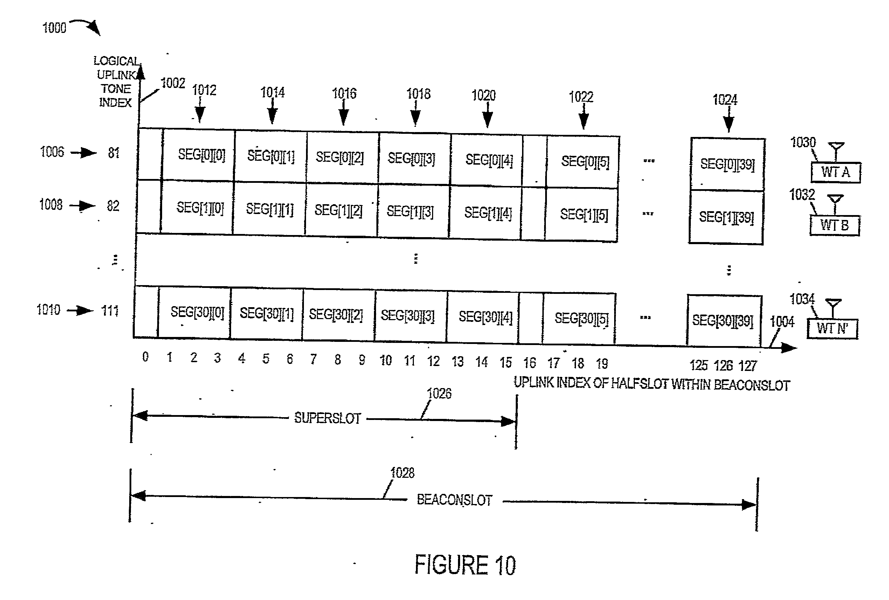

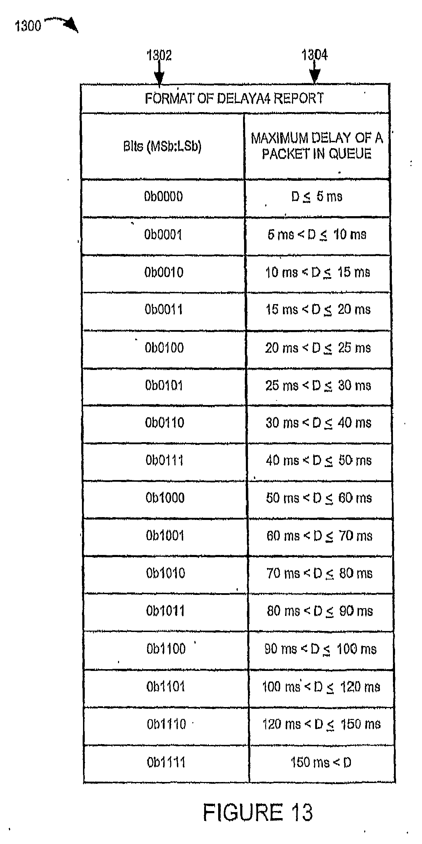

Channel structure information 266 includes, e.g., uplink dedicated control channel structure information identifying locations in a recurring structure for communicating delay information and/or backlog information. Figures 10, 11 and 12 include exemplary information that may be included as part of channel control structure information. Control reports' format information 268 include bit mapping definition information corresponding to control information reports including delay information reports, backlog information, reports, and combination delay/backlog reports. Figures 13, 14, 15, 17, 18, 19, 20, 21, 22, 23, 24, 25, 26 and 27 provide some exemplary reporting formats. For example, Figure 13 describes the format of a report communicating maximum delay information. Numerous variations of reporting formats are possible and may be used in various embodiments. For example, a particular reporting format may, and in some embodiments does, convey maximum delay information instead of minimum delay to a transmission deadline. Some formats may convey delay and/or backlog information associated with different designated transmission queues, request groups or transmission streams, e.g., frame count information (N[1], N[2], N[3], N[4]) and/or delay information (Delay[1], Delay[2], Delay[3], Delay[4]), associated with transmission queues, request groups or transmission streams (1, 2, 3, 4), respectively. Some embodiments alternate reporting to convey information about different transmission queues, request groups or transmission streams, e.g., following a predetermined pattern. Some formats convey information identifying the associated transmission queues, request groups or transmission streams to which the delay information and/or backlog information corresponds. Some formats support the opportunity to report about different transmission queues, request groups or transmission streams in the same report slot. Some formats may convey aggregate delay and/or backlog information for the wireless terminal.

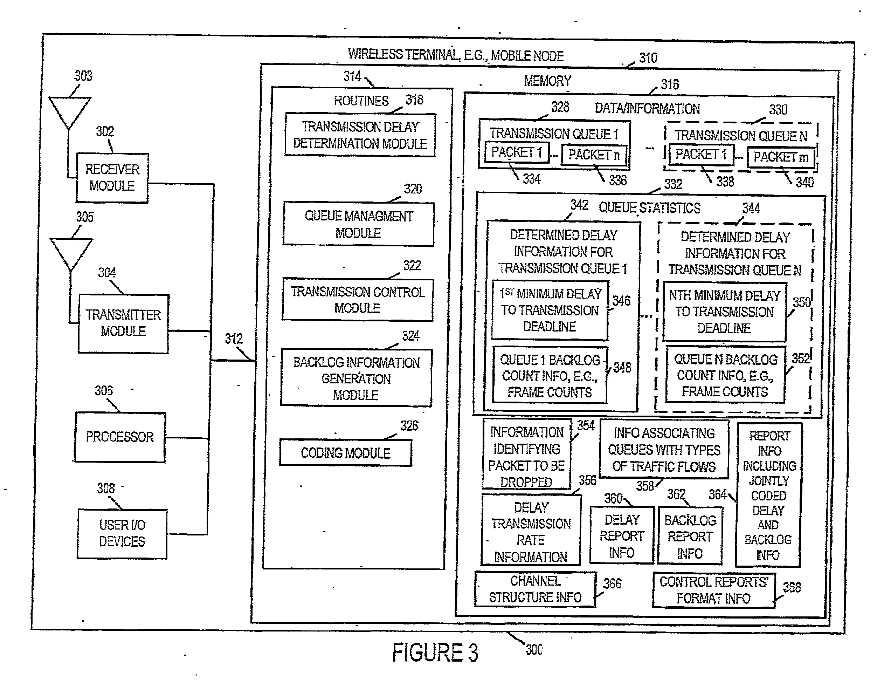

Figure 3 is a drawing of an exemplary wireless terminal 300, e.g., mobile node, in accordance with various embodiments. Exemplary wireless terminal 300 may be any of the exemplary wireless terminals (110, 112, 114, 116) of system 100 of Figure 1.

Wireless terminal 300 includes a receiver module 302, a transmitter module 304, a processor 306, user I/O devices 308, and a memory 310 coupled together via a bus 312 over which the various elements interchange data and information. Memory 310 includes routines 314 and data/information 316. The processor 306, e.g., a CPU, executes the routines 314 and uses the data/information 316 in memory 310 to control the operation of the wireless terminal 300 and implement methods.

Receiver module 302, e.g., an OFDM receiver, is coupled to receive antenna 303 via which the wireless terminal 300 receives downlink signals. Downlink signals include assignment signals including assignments of uplink communications resources, e.g., assignment of uplink traffic channel segments. Transmitter module 304, e.g., an OFDM transmitter, is... coupled to transmit antenna 305, via which the wireless terminal 300 transmits uplink signals to a base station. Uplink signals include, e.g., control information reports including delay information reports, backlog information reports, and/or joint delay/backlog information reports. Uplink signals also include uplink traffic channel segment signals conveying packets of information from transmission queues. Transmitter module 304 transmits at least some delay information determined by transmission delay determination module 318. In some embodiments, transmitter module 304 transmits first and second minimum delays to transmission deadline corresponding to first and second transmission queues to a base station. In some embodiments, the same antenna is used for receiver and transmitter.

User I/O devices 308, e.g., microphone, keypad, keyboard, mouse, switches, camera, speaker, display, etc., allows a user of wireless terminal 300 to input data/information and to access output data/information. User I/O devices 308 also allow a user of wireless terminal 300 to control at least some functions of the wireless terminal.

Routines 314 include a transmission delay determination module 318, a queue management module 320, a transmission control module 322, a backlog information generation module 324, and a coding module 326. Transmission delay determination module 318 determines delay information corresponding to data to be transmitted, said delay information including at least a minimum delay to transmission deadline. Queue management module 320 manages the one or more transmission queues. Operations of queue management module 320 include dropping data, e.g., a packet, from a first transmission queue if no data is transmitted from the first transmission queue by the transmission deadline. Transmission control module 322 controls the transmitter module 304 to transmit minimum delay to transmission deadline information. In some embodiments, the transmission control module 322 controls the transmitter 304 to transmit a first minimum delay to transmission deadline more frequently than a second minimum delay to transmission deadline, e.g., minimum delay to transmission deadline 346 corresponding to transmission queue 1 328 is controlled to be transmitted more frequently than minimum delay to transmission deadline 350 corresponding to transmission queue N 330.

Backlog information generation module 324 generates information indicating an amount of data waiting to be transmitted, e.g., queue 1 backlog count information 348. Backlog information generation module 324 also uses queue backlog count information, e.g., queue 1 backlog count information 348, to generate a backlog report corresponding to backlog report information 362. Coding module 326 performs coding operations including jointly coding backlog information, e.g., frame counts of data to be transmitted, and delay information. For example, coding module 326 jointly codes 1^{st} minimum delay to transmission deadline 346 and queue 1 backlog count information 348 into an uplink control information report corresponding to report information 364.

Data/information 31 includes one or more transmission queues (transmission queue 1 328, ..., transmission queue N 330), queue statistics 332, information identifying packet(s) to be dropped 354, delay transmission rate information 356, information associating queues with types of traffic flows 358, delay report information 360, backlog report information 362, report information including jointly coded delay and backlog information 364, channel structure information 366 and control reports' format information 368.

The transmission queues (328, 330) store data to be transmitted by the wireless terminal. Transmission queue 1 328 includes a plurality of packets (packet 1 info 334, ..., packet n info 336). Transmission queues 330 includes a plurality of packets (packet 1 info 338, ..., packet m info 340). Queue statistics 332 includes one or more sets of determined delay information for a corresponding transmission queue (determined delay information for transmission queue 1342, ..., determined delay information for transmission queue N 344). Determined delay information for transmission queue 1 342 includes a 1^{st} minimum delay to transmissions deadline 346 and transmission queue 1 backlog count information 348, e.g., frame counts of backlog for transmission queue, 1. Determined delay information for transmission queue N 342 includes a Nth minimum delay to transmission deadline. 346 and transmission queue N backlog count information 352, e.g., frame counts of backlog for transmission queue N.

1^{st} minimum delay to transmission deadline 346 is a first minimum delay to a first data, e.g., packet, transmission deadline, said first minimum delay corresponding to data to be transmitted by the wireless terminal that has been waiting in the first transmission queue 328. Similarly, N^{th} minimum delay to transmission deadline 350 is a Nth minimum delay to an Nth data, e.g., packet, transmission deadline, said Nth minimum delay to a transmission deadline corresponding to data to be transmitted by the wireless terminal that has been waiting in the Nth transmission queue 330. Queue 1 backlog information 348 indicates and amount of backlog corresponding to transmission queue 1 328, e.g., a number of frames, e.g., a number of MAC frames, of backlog. Queue N backlog information 352 indicates and amount of backlog corresponding to Transmission queue N 330, e.g., a number of frames, e.g., a number of MAC frames, of backlog.

In some embodiments, at least some different transmission queues correspond to different traffic flows. Information 358 associates queues with types of traffic. For example, in one exemplary embodiment, transmission queue 1 328 is associated with a voice traffic flow and transmission queue N 330 is associated with a non-voice traffic flow, e.g., a gaming or other interactive traffic flow.

Information identifying a packet to be dropped 354 is an output of queue management module 320 and is used to update a transmission queue, e.g., management module 320 updates transmission queue 1 328 based on information 354. Delay transmission rate information 356, e.g., scheduling information corresponding to communicating delay information control reports and/or backlog reports including delay information is used by transmission control module 322 to controls the communication of delay information corresponding to different queues. Delay report information 360 is, e.g., information corresponding to a wireless terminal 300 generated delay information report, e.g., in a dedicated control channel reporting structure. Backlog report information 360 is, e.g., information corresponding to a wireless terminal 300 generated Backlog report, e.g., in a dedicated control channel reporting structure. Report information including jointly coded delay and backlog information 364, e.g., an output of coding module 326, represents a control information report conveying both delay information and backlog information, e.g., in a dedicated control channel reporting structure.

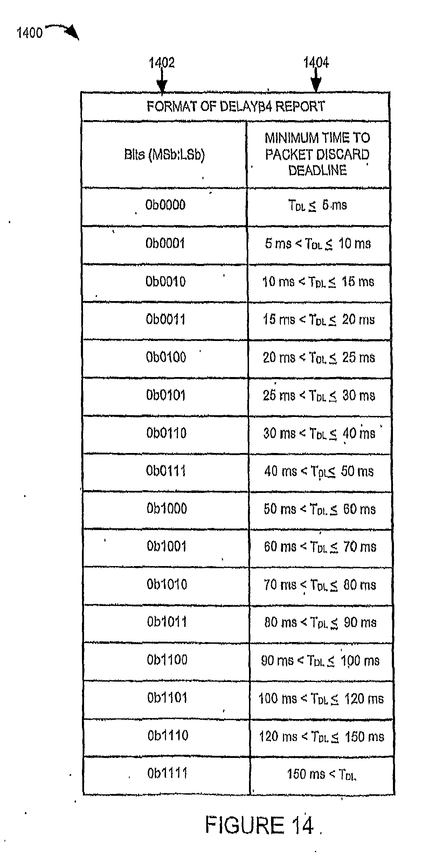

Channel structure information 366 includes, e.g., uplink dedicated control channel structure information identifying locations in a recurring structure for communicating delay information and/or backlog information. Figures 10, 11 and 12 include exemplary information that may be included as part of channel control structure information. Control reports' format information 368 include bit mapping definition information corresponding to control information reports including delay information reports, backlog information reports, and combination delay/backlog reports. Figures 13,14,15, 17, 18, 19, 20, 21, 22, 23, 24, 25, 26 and 27 provide some exemplary reporting formats. For example, Figure 14 describes the format of a report communicating minimum delay to transmission deadline information. Numerous variations of reporting formats are possible and may be used in various embodiments. For example, a particular reporting format may, and in some embodiments does, convey minimum delay to a transmission deadline information instead of a maximum queuing delays, Some formats may convey delay and/or backlog information associated with different designated transmission queues, request groups or transmission streams, e.g., frame count information (N[1], N[2], N[3], N[4]) and/or delay information (Delay[1], Delay[2], Delay[3], Delay[4]), associated with transmission queues, request groups or transmission streams (1, 2, 3, 4), respectively. Some embodiments alternate reporting to convey information about different transmission queues, request groups or transmission streams, e.g., following a predetermined pattern. Some formats convey information identifying the associated transmission queues, request groups or transmission streams to which the delay information and/or backlog information corresponds. Some formats support the opportunity to report about different transmission queues, request groups or transmission streams in the same report slot. Some formats may convey aggregate delay and/or backlog information for the wireless terminal.

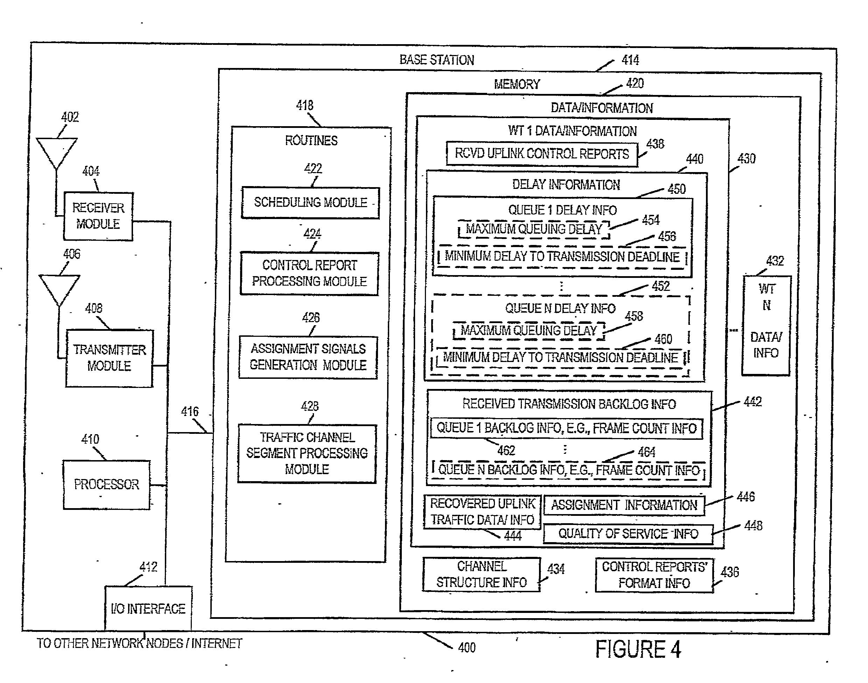

Figure 4 is a drawing of an exemplary base station 400 in accordance with various embodiments. Exemplary base station 400 may be any of the exemplary base stations (102, 104) of exemplary system 100 of Figure 1.

Base station 400 includes a receiver module 404, a transmitter module 408, a processor 410, an I/O interface 412, and a memory 414 coupled together via a bus 416 over which the various elements may interchange data and information. Memory 414 includes routines 418 and data/information 420. The processor 410, e.g., a CPU, executes the routines 418 and uses the data/information 420 in memory 414 to control the operation of the base station 400 and implement methods.

Receiver module 404, e.g., an OFDM receiver, is coupled to receive antenna 402 via which the base station 400 receives uplink signals from a plurality of wireless terminals. Uplink signals include, e.g., control information reports such as delay information reports, backlog information reports, and/or reports including jointly coded delay and backlog information. Receiver, modules 404 receives delay information from a first wireless terminal, the delay information corresponding to data waiting to be transmitted by the first wireless terminal. The receiver module 404 also receives additional delay information from at least one additional wireless terminal corresponding to data waiting to be transmitted by the at least one additional wireless terminal. Uplink signals also include traffic channel segment signals from wireless terminals conveying WT transmission queue(s) data.

Transmitter module 408, e.g., an OFDM transmitter, is coupled to transmits antenna 406 via which the base station transmits downlink signals to wireless terminals. The downlink signals include assignment signals conveying assignments of uplink traffic channel segments for wireless terminals.

I/O interlace 412 couples the base station 400 to other network nodes, e.g., other base stations, routes, AAA nodes, Home agent nodes, etc. and/or the Internet. I/O interface 412 by coupling base station 400 to a backhaul network allows a wireless terminal using a base station 400 attachment point to participate in a communications session with another wireless terminal using a different base station as its point of network attachment.

Routines 418 include a scheduling module 422, a control report processing module 424, an assignment signals generation modules 426, and a traffic channel segment processing module 428. Scheduling module 422, e.g. a scheduler, schedules wireless terminal uplink transmissions to said first wireless terminal as a function of received delay information corresponding to the first wireless terminal. In some embodiments, the scheduling of uplink transmission to said first wireless terminal by the scheduling module 422 is also performed as a function of received additional delay information corresponding to at least one additional wireless terminal. In some embodiments, the scheduling of uplink transmission to said first wireless terminal by the scheduling module 422 is also performed as a function of received backlog information from the first wireless terminal. In some embodiments, the scheduling of uplink transmission to said first wireless terminal by the scheduling module 422 is also performed as a function of received backlog information from at least one additional wireless terminal. In some embodiments, the scheduling of uplink transmission to said first wireless terminal by the scheduling module 422 is also performed as a function of stored quality of service information corresponding to the first wireless terminal. In some embodiments, the scheduling of uplink transmission to said first wireless terminal by the scheduling module 422 is also performed as a function of stored quality of service information corresponding to at least one additional wireless terminal.

In some embodiments, the first wireless terminal includes first and second queues, and delay information is received and stored corresponding to both first and second queues. In some such embodiments, the scheduling module 422 schedules wireless terminal uplink transmissions to the first wireless terminal as a function of the stored delay information, corresponding to both first and second queues.

In various embodiments, first and second transmission queues of the first wireless terminal correspond to first and second traffic flows, and the first traffic flow is a voice traffic flow and the second, traffic flow is a non-voice traffic flow, e.g., a gaming or other interactive uplink traffic flow.

Control report processing module 424 processes received uplink control information reports, e.g., delay information reports, backlog information reports, and/or combination reports conveying jointly coded delay and backlog information, and recovers the information being communicated, e.g., a maximum queuing delay, a minimum, delay to transmission deadline, and/or backlog information such as queue frame count or a queue delta frame count with respect to a previous report.

Assignment signals generation module 426 is responsive to scheduling module 422 decisions and generates assignment signals conveying uplink traffic channel segment assignments directed to identified wireless terminals. Traffic channel segment processing module 428 recovers uplink traffic channel segment signals from wireless terminals and associates the recovered information, e.g., packets of user data, with the scheduled wireless terminal corresponding to the segment.

Data/information 420 includes a plurality of sets of wireless terminal data/information (WT1 data/information 430, ... WTN data/information 432), channel structure information 434 and control reports' format information 436. WT1 data/information 430 includes received uplink control reports 488, delay information 440, received transmission backlog information 442, recovered uplink traffic data/information 444, assignment information 446, and quality of service information 448. In some embodiments, at least some of the different wireless terminals using base station 400 have during some interval different quality of service levels. Delay information 440 includes one or more sets of delay information (queue 1 delay information 450, ..., queue N delay information 452). Queue 1 delay information 450 includes at least one of: a maximum queuing delay 454 corresponding to WT 1 transmission queue 1 and a minimum delay to transmission deadline 456 corresponding to WT 1 transmission queue 1. Maximum queuing delay 454 indicates a maximum amount of time data waiting to be transmitted has been waiting in WT 1's transmission queue 1. Queue N delay information 452 includes at least one of: a maximum queuing delay 458 corresponding to WT1 transmission queue N and a minimum delay to transmission deadline 460 corresponding to WT 1. transmission queue N. Received transmission backlog information 442 indicates amount(s) of data waiting to be transmitted to base station 400 by WT1. Received transmission backlog information 442 includes one or more of queue backlog information (queue 1 backlog information. 462, ..., queue N backlog information 464). For example, queue 1 backlog information 462 is a frame count representing WT transmission queue 1 backlog waiting to be transmitted, and queue N backlog information 464 is a frame count representing WT transmission queue N backlog waiting to be transmitted.

Received uplink control reports 438 include various control information reports used by the base station to characterize the wireless terminal, e.g., delay information reports, backlog request reports for requesting uplink traffic channel resources, combination backlog/delay reports, interference reports, power reports, self-noise reports, and SNR reports. Channel structure information 434 includes, e.g., uplink dedicated control channel structure information identifying locations in a recurring structure for communicating delay information and/or backlog information. In some embodiments, the channel structure information 434 includes information identifying that delay information corresponding to a wireless terminal's first transmission queue is to be communicated at a higher rate than delay information corresponding to the same wireless terminal's second transmission queue. Control reports' format information 436 includes bit mapping definition information corresponding to delay information reports, backlog information reports, and combination delay/backlog reports.

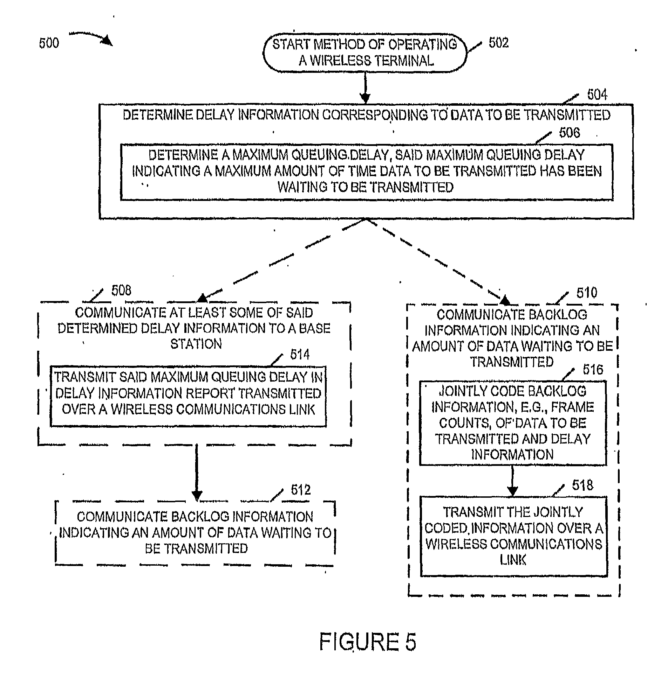

Figure 5 is a drawing of a flowchart 500 of an exemplary method of operating a wireless terminal in accordance with various embodiments. Operation starts in step 502, where the wireless terminal is powered on and initialized, and proceeds to step 504. In step 504, the wireless terminal determines delay information corresponding to data to be transmitted. Step 504 includes sub-step 506. In sub-step 506, the wireless terminal determines a maximum queuing delay, said maximum queuing delay indicating a maximum amount of time data to be transmitted has been waiting to be transmitted.
In some embodiments, determining a maximum queuing delay includes determining individual maximum queuing delays corresponding to each a plurality of transmission streams and determining the maximum queuing delay as a function of the determined individual maximum queuing delays, e.g., by using the largest determined individual maximum queuing delay as the determined maximum queuing delay.

In some embodiments, the wireless terminal determines aggregate backlog information and/or condition based aggregate backlog information corresponding to a plurality of transmission streams.

Operation proceeds from step 504 to one of alternate steps 508 and step 510.

In step 508, the wireless terminal communicates at least some of said determined delay information to a base station. Step 508 includes sub-step 514. In sub-stop 514, the wireless terminal transmits said maximum queuing delay in a delay information report transmitted over a wireless communications link. Operation proceeds from step 508 to step 512. In step 512, the wireless terminal communicates backlog information indicating an amount of data waiting to be transmitted. In some such embodiments, the communicated backlog, information includes aggregated backlog information and/or condition based aggregate backlog information corresponding to a plurality of transmission streams.

In alternative step 510, the wireless terminal communicates backlog information indicating an amount of data waiting to be transmitted. Step 510 includes sub-steps 516 and 518. In sub-step 516, the wireless terminal jointly codes backlog information, e.g., frame counts, of data to be transmitted and delay information. In some embodiment, the backlog information includes aggregated backlog information and/or condition based aggregate backlog information corresponding to a plurality of transmission streams. Then, in sub-step 518, the wireless terminal transmits the jointly coded information over a wireless communications link.

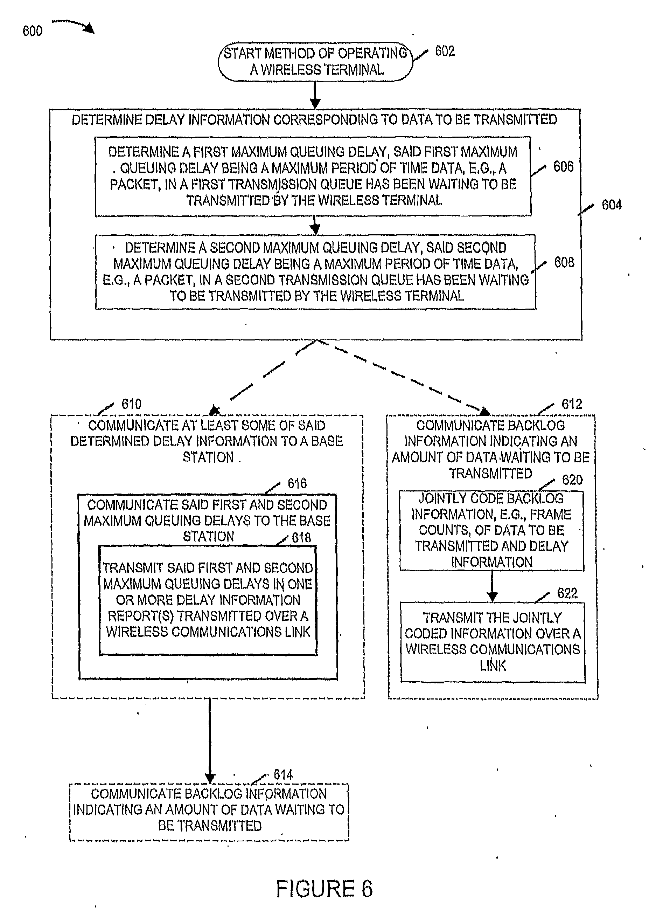

Figure 6 is a drawing, of a flowchart 600 of an exemplary method of operating a wireless terminal in accordance with various embodiments. Operation starts in step 602, where the wireless terminal is powered on and initialized, and proceeds to step 604. In step 604, the wireless terminal determines delay information corresponding to data to be transmitted. Step 604 includes sub-steps 606 and 608. In sub-stop 606, the wireless terminal determines a first maximum queuing delay, said first maximum queuing delay being a maximum period of time data, e.g., a packet, in a first transmission queue has been waiting to be transmitted by the wireless terminal. In sub-step 608, the wireless terminal determines a second maximum queuing delay, said second maximum queuing delay being a maximum period of time data, e.g., a packet, in a second transmission queue has been waiting to be transmitted by the wireless terminal.

In some embodiments, the first and second transmission queues correspond to different traffic flows. In some such embodiments, the first transmission queue corresponds to a voice traffic flow and the second transmission queue corresponds to a non-voice traffic flow, e.g., a gaming traffic flow or other interactive traffic flow. Operation proceeds from step 604 to one of alternate steps 610 and step 612.

In step 610, the wireless terminal communicates at least some of said determined delay information to a base station. Step 610 includes sub-step 616, In sub-step 616, the wireless terminal communicates said first and second maximum queuing delays to the base station. Sub-step 615 includes sub-step 618. In sub-step 618, the wireless terminal transmits said first and second maximum queuing delays in or more delay information report(s) transmitted over a wireless communications link. In some embodiments, the first maximum queuing delay is reported more frequently than the second maximum queuing delay. In some embodiments, the maximum of the two queuing delays is reported. Operation provides from step 610 to step 614. In step 614, the wireless terminal communicates backlog information indicating an amount of data waiting to be transmitted.

In alternative step 612, the wireless terminal communicates backlog information indicating an amount of data waiting to be transmitted. Step 612 includes sub-steps 620 and 622. In sub-step 620, the wireless terminal jointly codes backlog information, e.g., frame counts, of data to be transmitted and delay information. Then, in sub-step 622, the wireless terminal transmits the jointly coded information over a wireless communications link. In some embodiments, the first maximum queuing delay is reported more frequently than the second maximum queuing delay.

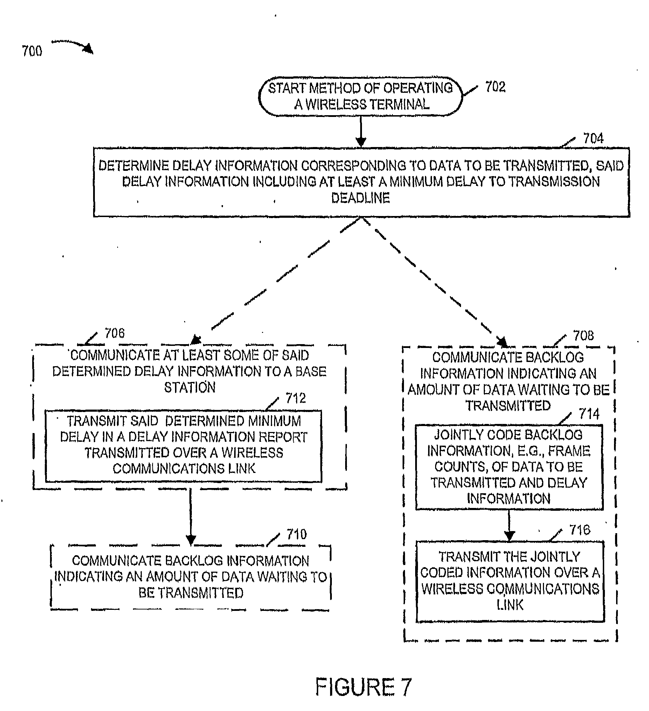

Figure 7 is a drawing of a flowchart 700 of an exemplary method of operating a wireless terminal in accordance with various embodiments. Operation starts in step 702, where the wireless terminal is powered on and initialized, and proceeds to step 704. In step 704, the wireless terminal determines delay information corresponding to data to be transmitted, said delay information including at least a minimum delay to transmission deadline. In some embodiments, determining a minimum delay to transmission deadline to be communicated includes determining an individual minimum delay to transmission deadline corresponding to each a plurality of transmission streams and determining the minimum delay to transmission deadline to be communicated as a function of the determined individual minimum determined delays, e.g., by using the smallest of the determined individual delays to deadline from the set under consideration as the minimum delay to transmission deadline.

In some embodiments, the wireless terminal determines aggregate backlog information and/or condition based aggregate backlog information corresponding to a plurality of transmission streams.

Operation proceeds from step 704 to one of alternate steps 706 and step 708.

In step 706, the wireless terminal communicates at least some of said determined delay information to a base station. Step 706 includes sub-step 712, In sub-step 712, the wireless terminal transmits said determined minimum delay in a delay information report transmitted over a wireless communications link. Operation provides from step 706 to step 710. In step 710, the wireless terminal communicates backlog information indicating an amount of data waiting to be transmitted. In some such embodiments, the communicated backlog information includes aggregated backlog information and/or condition based aggregate backlog information corresponding to a plurality of transmission streams.

In alternative step 708, the wireless terminal communicates backlog information indicating an amount of data waiting to be transmitted. Step 708 includes sub-steps 714 and 716. In sub-step 714, the wireless terminal jointly codes backlog information, e,g., frame counts, of data to be transmitted and delay information. In some embodiments, the backlog information includes aggregated backlog information and/or condition based aggregate backlog information corresponding to a plurality of transmission streams. Then, in sub-step 716, the wireless terminal transmits the jointly coded information over a wireless communications link.

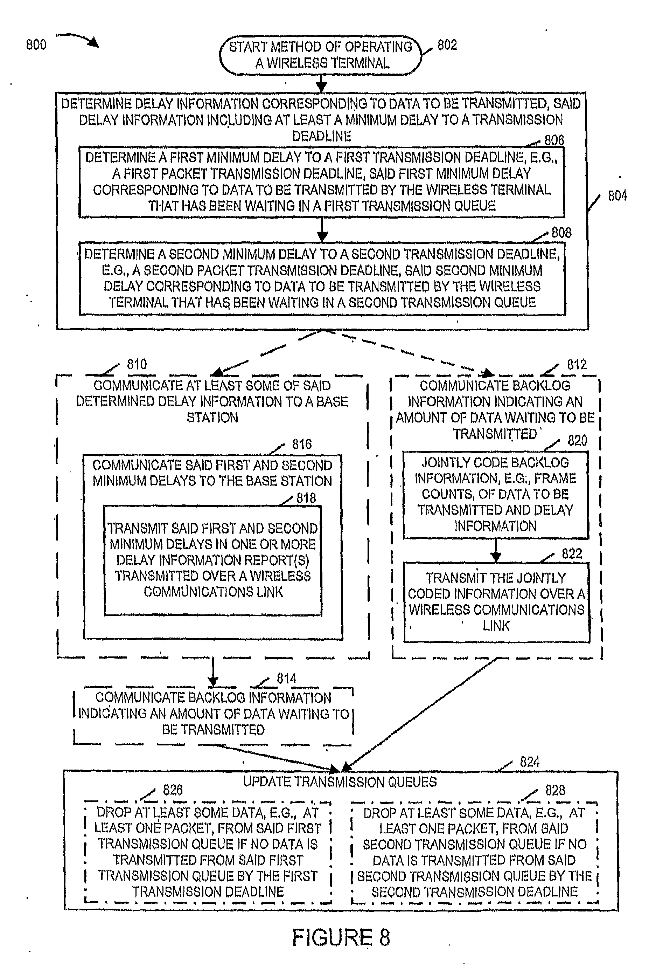

Figure 8 is a drawing of a flowchart 800 of an exemplary method of operating a wireless terminal in accordance with various embodiments. Operation starts in step 802, where the wireless terminal is powered on and initialized, and proceeds to step 804. In step 804, the wireless terminal determines delay information corresponding to data to be transmitted, said delay information including at least a minimum, delay to a transmission deadline. Step 804 includes sub-steps 806 and 808. In sub-step 806, the wireless terminal determines a first minimum delay to a first transmission deadline, e.g., a first packet transmission deadline, said first minimum delay corresponding to data to be transmitted by the wireless terminal that has been waiting in a first transmission queue. In sub-step 808, the wireless terminal determines a second minimum delay to a second transmission deadline, e.g., a second packet transmission deadline, said second minimum delay corresponding to data to be transmitted by the wireless terminal that has been waiting in a second transmission queue.

In some embodiments, the first and second transmission queues correspond to different traffic flows, In some such embodiments, the first transmission queue corresponds to a voice traffic flow and the second transmission queue corresponds to a non-voice traffic flow, e.g., a gaming traffic flow or other interactive traffic flow. Operation proceeds from step 804 to one of alternate steps 810 and step 812,

In step 810, the wireless terminal communicates at least some of said determined delay information to a base station. Step 810 includes sub-step 816. In sub-step 816, the ' wireless terminal communicates said first and second minimum delays to the base station. Sub-step 816 includes sub-step 818. In sub-step 818, the wireless terminal transmits said first and second minimum delays in one or more delay information report(s) transmitted over a wireless, communications link. In some embodiments, the first minimum delay is reported more frequently than the second minimum delay. In some embodiments, the minimum of the two delays is reported. Operation provides from step 810 to step 814. In step 814, the wireless terminal communicates backlog information indicating an amount of data waiting to be transmitted.

In alternative step 812, the wireless terminal communicates backlog information indicating an amount of data waiting to be transmitted. Step 812 includes sub-steps 820 and 822. In sub-step 820, the wireless terminal jointly codes backlog information, e.g., frame counts, of data to be transmitted and delay information. Then, in sub-step 822, the wireless terminal transmits the jointly coded information over a wireless communications link. In some embodiment, the first minimum delay is reported more frequently than the second minimum delay.

Operation proceeds from step 814 or step 812 to step 824, in which the wireless terminal updates transmission queues. Step 824 includes sub-step 826 and 828 which are performed at times. In sub-step 826, the wireless terminal drops at least some data, e.g., at least one packet, from said first transmission queue if no data is transmitted from the first transmission queue by the first transmission deadline. In sub-step 828, the wireless terminal drops at least some data, e.g., at least one packet, from said second transmission queue if no data is transmitted from the second transmission queue by the second transmission deadline.

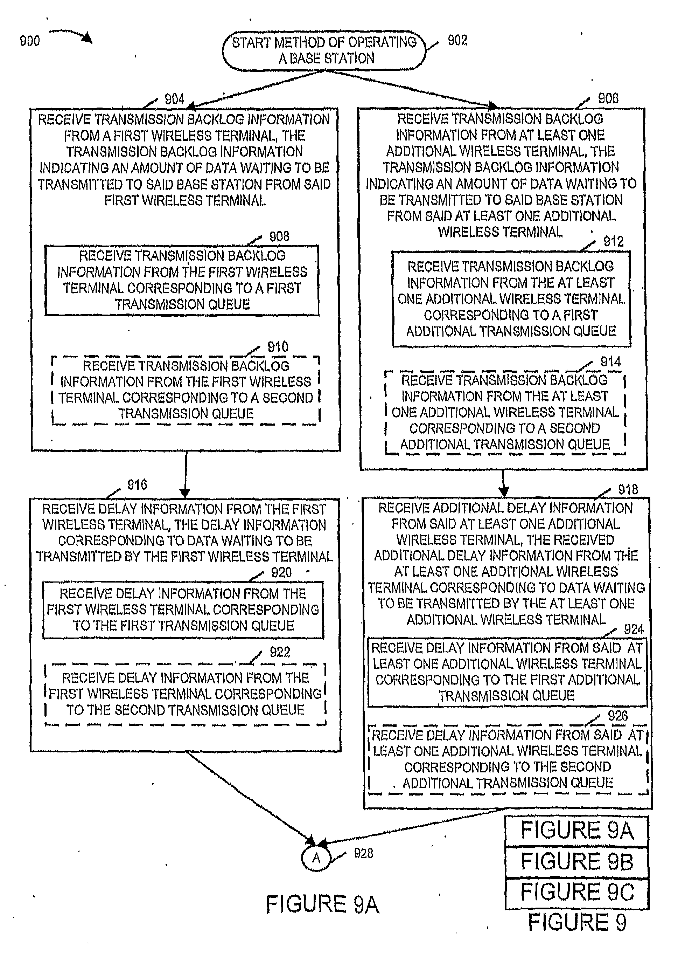

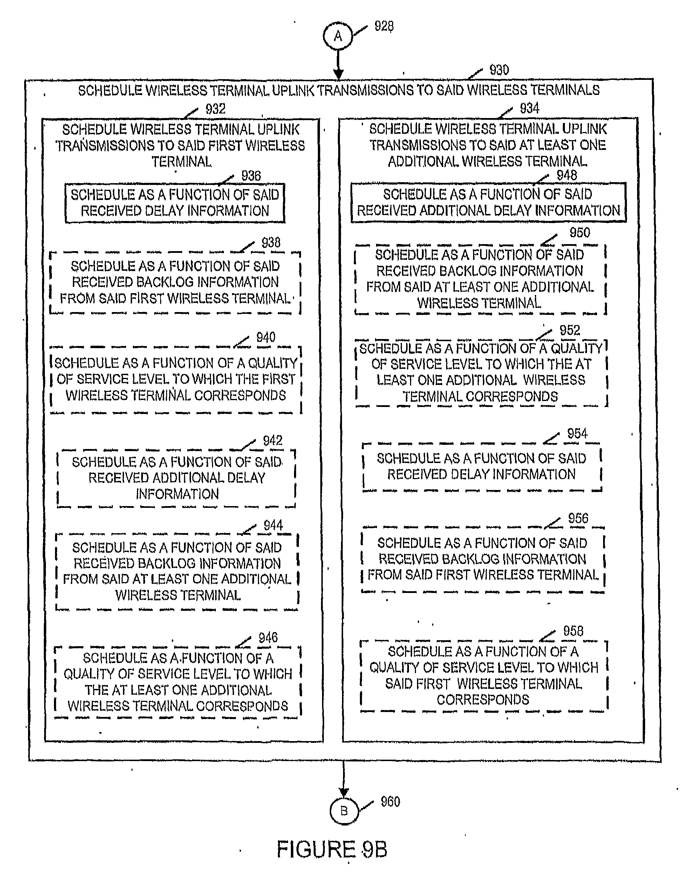

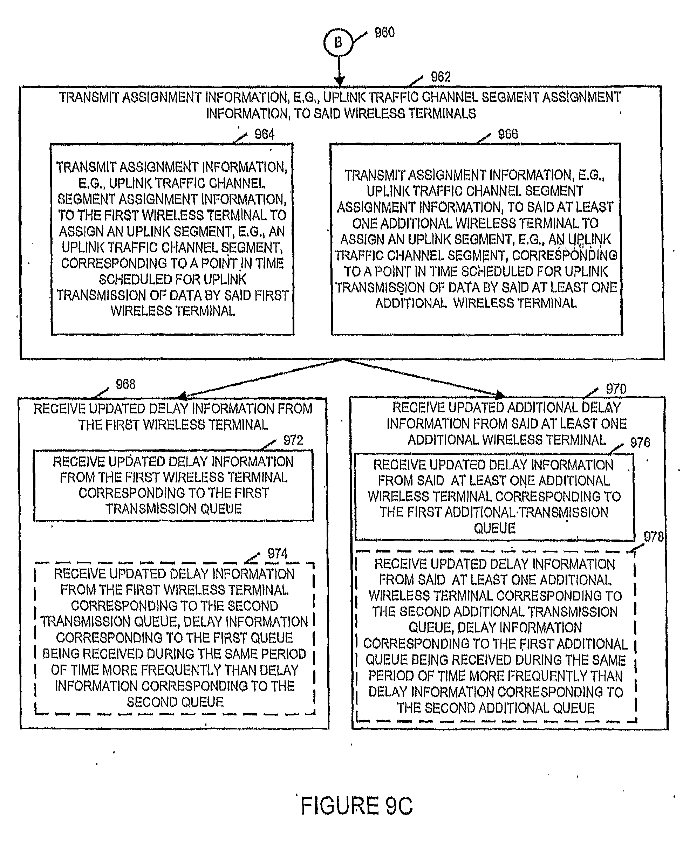

Figure 9 comprising the combination of Figure 9A, Figure 9B and Figure 9C is a drawing of a flowchart 900 of an exemplary method of operating abase station in accordance with various embodiments. The exemplary method starts in step 902, where the base station is powered on and initialized and proceeds to steps 904 and 906.

In step 904, the base station receives transmission backlog information from a first wireless terminal, the transmission backlog information indicating an amount of data, waiting to be transmitted to said base station from said first wireless terminal. Step 904 includes sub-step 908, and in some embodiments, sub-step 910. In sub-step 908, the base station receives transmission backlog from the first wireless terminal corresponding to a first transmission queue. In sub-step 910, the base station receives transmission backlog from the first wireless terminal corresponding to a second transmission queue. Operation proceeds from step 904 to step 916.

In step 906, the base station receives transmission backlog information from at least one additional wireless terminal, the transmission backlog information indicating an amount of data waiting to be transmitted to said base station from said at least one additional wireless terminal, Step 906 includes sub-step 912, and in some embodiments, sub-step 914. In sub-step 912, the base station receives transmission backlog from the at least one additional wireless terminal corresponding to a first additional transmission queue. In sub-step 914, the base station receives transmission backlog from the at least one additional wireless terminal corresponding to a second additional transmission queue. Operation proceeds from step 906 to step 918.

In step 916, the base station receives delay information from the first wireless terminal, the delay information corresponding to data waiting to be transmitted by the first wireless terminal. Step 916 includes sub-step 920 and, in some embodiments, sub-step 922. In sub-step 920, the base station receives delay information from the first wireless terminal corresponding to the first transmission queue. In sub-step 922, the base station receives delay information from the first wireless terminal corresponding to the second transmission queue.

In step 918, the base station receives delay information from, said at least one additional wireless terminal, the delay information corresponding to data waiting to be transmitted by said at least one additional wireless terminal. Step 918 includes sub-step 924 and, in some embodiments, sub-step 926. In sub-step 924, the base station receives delay information from said at least one additional wireless terminal corresponding to the first additional transmission queue. In sub-step 922, the base station receives delay information, from said at least one additional wireless terminal corresponding to the second additional transmission queue.

Operation proceeds from steps 916 and 918 via connecting node A 928 to step 930. In step 930, the base station schedules wireless terminal uplink transmission to said wireless terminals. Step 930 includes sub-steps 932 and 934. In sub-step 932, the base station schedules wireless terminal uplink transmissions to said first wireless terminal. In sub-step 934, the base station schedules wireless terminal uplink transmissions to said at least one wireless terminal.

Sub-step 932 includes sub-step 936 and, in some embodiments, one or more of sub-steps 938, 940, 942, 944 and 946, In sub-step 936, the base station schedules wireless terminal uplink transmissions to said first wireless terminal as a function of said received delay information. In sub-step 938, the base station schedules wireless terminal uplink transmissions to said first wireless terminal as a function of said received backlog information from said first wireless terminal. In sub-step 940, the base station schedules wireless terminal uplink transmissions to said first wireless terminal as a function of a quality of service level to which the first wireless terminal corresponds. In sub-step 942, the base station schedules wireless terminal uplink transmissions to said first wireless terminal as a function of said received additional delay information. In sub-step 944, the base station schedules wireless terminal uplink transmissions to said first wireless terminal as a function of said received backlog information from said at least one additional wireless terminal. In sub-step 946, the base station schedules wireless terminal uplink transmissions to said first wireless terminal as a function of a quality of service level to which the at least one additional wireless terminal corresponds. In various embodiments, the quality, of service level corresponding to the first wireless terminal may be, and sometimes is, different than the quality of service level corresponding to the at least one additional wireless terminal.

Sub-step 934 includes sub-step 948 and, in some embodiments, one or more of sub-steps 950, 952, 954, 956 and 958. In sub-step 948, the base station schedules wireless terminal uplink transmissions to said at least one additional wireless terminal as a function of said received additional delay information. In sub-step 950, the base station schedules wireless terminal uplink transmissions to said at least one additional wireless terminal as' a function of said received backlog information from said at least one additional wireless terminal. In sub-step 952, the base station schedules wireless terminal uplink transmissions to said at least one additional wireless terminal as a function of a quality of service level to which the at least one additional wireless terminal corresponds. In sub-step 954, the base station schedules wireless terminal uplink transmissions to said at least one additional wireless terminal as a function of said received delay information. In sub-step 956, the base station schedules wireless terminal uplink transmissions to said at least one additional wireless terminal as a function af said received backlog information from said first wireless terminal. In sub-step 958, the base station schedules wireless terminal uplink transmissions to said at least one additional wireless terminal as a function of a quality of service level to which said first wireless terminal corresponds.

Operation proceeds from step 930 via connecting node B 960 to step 962. In step 962, the base station transmits, assignment information, e.g., uplink traffic channel segment assignment information, to said wireless terminals. Step 962 includes sub-steps 964 and 966. In sub-step 964, the base station transmits assignments information, e.g., uplink traffic channel segment assignment information, to the first wireless terminal to assign an uplink segment, e.g., an uplink traffic channel segment, corresponding to a point in time scheduled for uplink transmission of data by said first wireless terminal. In sub-step 966, the base station transmits assignment information, e.g., uplink traffic channel segment assignment information, to said'at least one additional wireless terminal to assign an uplink segment, e.g., an uplink traffic channel segment, corresponding to a point in time scheduled for uplink transmission of data by said at least one additional wireless terminal. Operation proceeds from step 962 to steps 968 and 970.

In step 968, the base station receives updated delay information from the first wireless terminal. Step 968 includes sub-step 972 and, in some embodiments, sub-step 974. In sub-step 972, the base station receives updated delay information from the first wireless terminal corresponding to the first transmission queue, In sub-step 974, the base station receives updated delay information from the first wireless terminal corresponding to the second transmission queue, delay information corresponding to the first queue being received during the same period of time more frequently than delay information corresponding to the second queue.

In step 970, the base station receives updated delay information from said at least one additional wireless terminal. Step 970 includes sub-step 976 and, in some embodiments, sub-step 978. In sub-step 976, the base station receives updated delay information from said at least one additional wireless terminal corresponding to the first additional transmission queue. In sub-step 978, the base station receives updated delay information from said additional wireless terminal corresponding to the second additional transmission queue, delay information corresponding to the first additional queue being received during the same period of time more frequently than delay information corresponding to the second additional queue.

In some embodiments, the first and second transmission queues correspond to first and second traffic flows, respectively. In some such embodiments, the first traffic flow is a voice traffic flow and the second traffic flow is a non-voice traffic flow, e.g., a gaming traffic flow or other interactive traffic flow.

In some embodiments, the delay information received from the first wireless terminal includes a maximum queuing delay, said maximum queuing delay indicating a maximum amount of time data waiting to be transmitted has been waiting. In some embodiments, the delay information received from the first wireless terminal includes a minimum delay to a transmission deadline;

Figure 10 is a drawing 1000 of exemplary uplink dedicated control channel (DCCH) segments in an exemplary uplink timing and frequency structure in an exemplary orthogonal frequency division multiplexing (OFDM) multiple acess wireless communications system. The uplink dedicated control channel is used to send Dedicated Control Reports (DCR) from wireless terminals to base stations. Vertical axis 1002 plots logical uplink tone index while horizontal axis 1004 plots the uplink index of the halfslot within a beaconslot. In this example, an uplink tone block includes 113 logical uplink tones indexed (0, ..., 112); there are seven successive OFDM symbol transmission time periods within a halfslot, 2 additional OFDM symbol time periods hollowed by 16 successive half-slots within, a superslot, and 8 successive superslots within a beacon slot. The first 9 OFDM symbol transmission time periods within a superslot are an access interval, and the dedicated control channel does not use the air link resources of the access interval.

The exemplary dedicated control channel is subdivided into 31 logical tones (uplink tone index 81. 1006, uplink tone index 82 1008, ... , uplink tone index 111 0110). Each logical uplink tone (81, ..., 111) in the logical uplink frequency structure corresponds to a logical tone indexed with respect to the DCCH channel (0, ..., 30).

For each tone in the dedicated control channel there are 40 segments in the beaconslot corresponding to forty columns (1012, 1014, 1016,1018, 1020, 1022, ... , 1024). The segment structure repeats on a beaconslot basis. For a given tone in the dedicated control channel there are 40 segments corresponding to a beaconslot 1028; each of the eight superslots of the beaconslot includes 5 successive segments for the given tone. For example, for first superslot 1026 of beaconslot 1028, corresponding to tone 0 of the DCCH, there are five indexed segments (segment [0][0], segment [0][1], segment [0][2], segment [0][3], segment [0][4]). Similarly, for first superslot 1026 of beaconslot 1028, corresponding to tone 1 of the DCCH, there are five indexed segments (segment [1][0], segment [1][1], segment [1][2], segment [1][3], segment [1][4]). Similarly, for first superslot 1026 of beaconslot 1028, corresponding to tone 30 of the DCCH, there are five indexed segments (segment [30][0], segment [30][1], segment [30][2], segment [30][3], segment [30][4]).

In this example each segment, e.g., segment [0][0], comprises one tone for 3 successive half-slots, e.g., representing an allocated uplink air link resource of 21 OFDM tone-symbols. In some embodiments, logical uplink tones are hopped to physical tones in accordance with an uplink tone hopping sequence such that the physical tone associated with a logical tone may be different for successive half-slots, but remains constant during a given half-slot.

Each logical tone of the dedicated control channel may be assigned by the base station to a different wireless terminal using the base station as its current point of attachment. For example, logical tone (1006,1008,..., 1010) may be currently assigned to (WT A 1030, WT B 1032, ... , WT N' 1034), respectively.

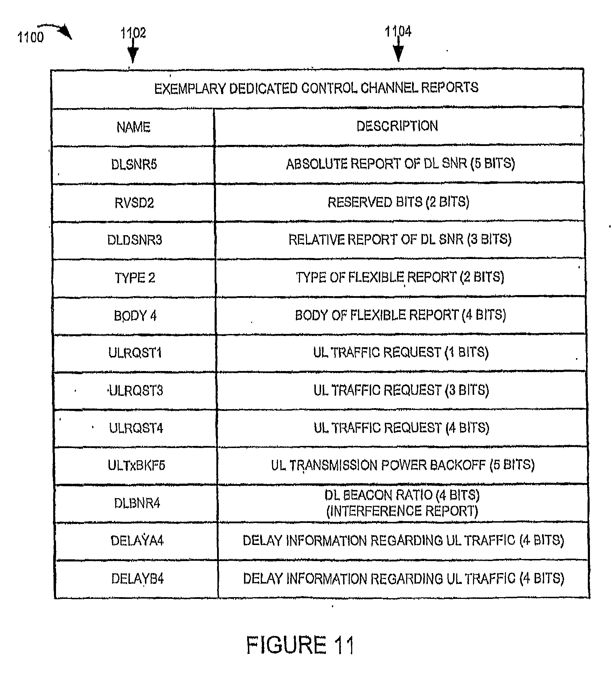

Each uplink DCCH segment is used to transmit a set of Dedicated Control Channel Reports (DCRs). A list of exemplary DCRs is given in table 1100 of Figure 11, First column 1102 of table 110 describes abbreviated names used for each exemplary report. The name of each report ends with a number which specifies the number of bits of the DCR. Second column 1104 of table 1100 briefly describes each named report. In this exemplary embodiment, there are two type of Delay information reports DELAYA4 and DELAYB4. In addition, the flexible report, whose type is defined by report TYPE2 can be used to carry a DELAYA4 report or, a DELAYB4 report in a corresponding BODY4 report. In addition, uplink request reports, e.g., ULRQST1, ULRQST3 and/or ULRQST4, are, in some embodiments, used to convey delay information.

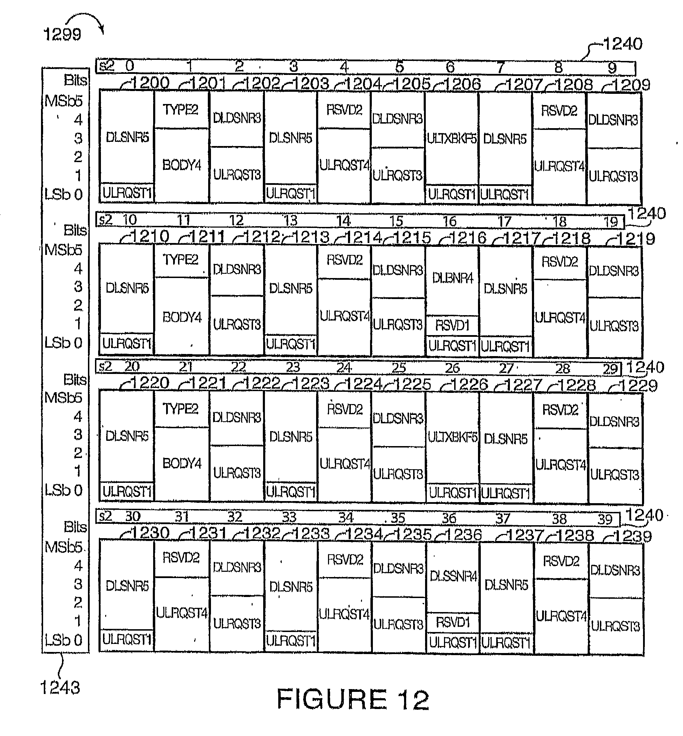

Figure 12 is a drawing 1299 illustrating an exemplary reporting format information in an exemplary beaconslot for a given DCCH tone, e.g., corresponding to a wireless terminal. In Figure 12, each block (1200, 1201, 1202, 1203, 1.204, 1.205, 1.206, 127 1208, 1209, 1210; 1211, 1212, 1213, 1214, 1215, 1216, 1217, 1218, 1.219, l220, 1221, 1222, 1223,1224,1225,1226,1227,1228,1229,1230, 131, 1232,1233,1234,1235,1236, 1237, 1238, 1239) represents one segment whose index s2 (0, ..., 39) is shown above the block in rectangular region 1240. Each block, e.g., block 1200 representing segment 0, conveys 6 information bits; each block comprises 6 rows corresponding to the 6 bits in the segment, where the bits are listed from the most significant bit to the least significant bit downwards from the top row to the bottom row as shown in rectangular region 1243.

In this exemplary embodiment, delay information is conveyed by means of the flexible report and/or by means of one or more of the uplink request reports (ULRQST1, ULRQST3 and/or ULRQST4). In other embodiments, predetermined slots are allocated in the reporting structure, which are reserved for delay information reports. For example, one or more of the four bit designed report slots in the exemplary reporting structure of Figure 12 may be replaced with a DELAYA4 report. In some embodiments some predetermined slots are allocated to convey delay information corresponding to a first queue and some other predetermined slots are allocated to convey delay information corresponding to a second queue. In some such embodiments, the allocation may be such that the delay information corresponding to the first queue is transmitted at a different rate, e.g., a higher rate, than the delay information corresponding to the second queue. In some embodiments, the first and second queues correspond to different request groups. In some embodiments, communicated delay information and/or communicated backlog information represents aggregated information, e.g., corresponding to a plurality of transmission streams,

Figure 13 is a drawing of a table 1300 describing an exemplary format of exemplary 4 bit delay report (DELAYA4). Column 1302 of table 1300 lists the 16 possible information bit patterns for the report, and column 1304 lists, for each of the possible bit patterns, maximum delay time information for a packet in a transmission queue which is conveyed by the report if that bit pattern is communicated. For example, bit pattern = 0011 means that the maximum delay time is greater than 15 ms and less than or equal to 20 ms.

Figure 14 is a drawing of a table 1400 describing an exemplary format of exemplary 4 bit delay report (DELAYB4). Column 1402 of table 1400 lists the 16 possible information bit patterns for the report, and column 1404 lists, for each of the possible bit patterns, minimum delay to packet discard deadline information for a packet in a transmission queue which is conveyed by the report if that bit pattern is communicated. For example, bit pattern = 0101 means that the minimum delay to transmission deadline is greater than 25 ms and less than or equal to 30 ms.

In some embodiments, at least some delay information reporting formats accommodate reporting delay information corresponding to a plurality of different queues. For example, different delay information can be, and sometimes is, reported corresponding to different queues or different groupings of data to be transmitted, e.g., a first delay associated with queued voice traffic and a second delay associated with other time sensitive traffic.

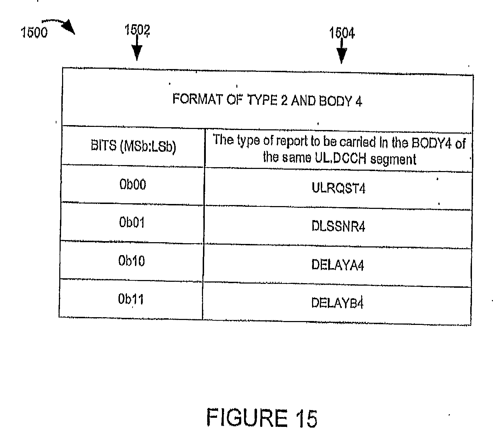

Figure 15 is a drawing of a table 1500 describing an exemplary flexible report corresponding to TYPE 2 and BODY4. In the flexible report, the wireless terminal selects which type of report to communicate in the allocated flexible report slot. In this exemplary embodiment, the selection for the flexible report includes the option to report delay information, e.g., using either DELAYA4 or DELAYB4 format. The wireless terminals communicates its selection of report type in a TYPE2 report and a corresponding selected report in the BODY4 report of the allocated flexible report slot.. Column 1502 of table 1500 lists the 4 possible information bit patters for the TYPE2 report, and column 1504 lists, for each of the possible bit patterns, the report to be carried in the BODY4 report position if that bit pattern is communicated. For example, if bit pattern = 11 is communicated in the TYPE2 report slot, a DELAYB4 report is to be communicated in the corresponding BODY4 slot.

In various embodiments a wireless terminal provides delay information for uplink traffic backlog. In order to enable a base station (BS) to provide adequate quality of service (QoS) in the uplink, the wireless terminal (WT), in some embodiments, periodically transmits control information to the BS. For example, this control information includes, in some embodiments, of one or more of the following: amount of backlog, i.e., queue length, at the WT, power availability at the WT and information pertaining to interference management, such as, e.g., path loss ratio or beacon ratio reports. However, a scheduler, in addition to the information listed above, could also beneficially use information related to delay in order to make timely decisions when scheduling delay-sensitive traffic. Examples of such delay-sensitive traffic include voice, gaming and other interactive applications.

Delay information can, in some embodiments, take one of the following two forms. (1) The maximum queuing delay across each of the packets in the WT's queue. In the case where the WT has multiple queues, each for a different traffic flow, the maximum could, in some embodiments, be computed across the packets in one or more queues. Note that each of these queues could represent traffic with different QoS requirements. Typically, this maximum would be calculated for packets that belong to delay-sensitive traffic flows. (2) The minimum time remaining to scheduling deadline or packet discard deadline across each of the packets in the WT's queue. Once again, if the WT has multiple queues, each for a different traffic flow, the minimum could, in some embodiments, be calculated for packets with latency or delay constraints.

The delay information itself can be reported in several ways. In an exemplary system, e.g., an exemplary OFDM wireless communications system, for example, the delay information can be transmitted using request dictionaries. An exemplary request dictionary, in some exemplary embodiment, includes a plurality of different bit size request reports, e.g., a 1-bit, a 3-bit and a 4-bit request report. Each of these reports is used to provide information pertaining to the backlog across traffic flows at the WT.

The 1-bit report, for example, can be used to simply indicate the presence of traffic with time remaining to deadline less than T ms. For example, T could equal 20ms. The remaining report types are, e.g., used to provide more detailed backlog information, such as time remaining to deadline and total backlog, for the traffic flows. More precisely, each of these reports could be used to convey one or both deadline and total backlog information. This is illustrated below using several examples.

Let D denote the minimum time remaining, in milliseconds, to the scheduling deadline for each of the packets in the WT's queues. Let N denote the total Backlog at the WT, e.g., a MAC, frame count. Using these notations, the 3-bit and 4-bit reports are as follows.

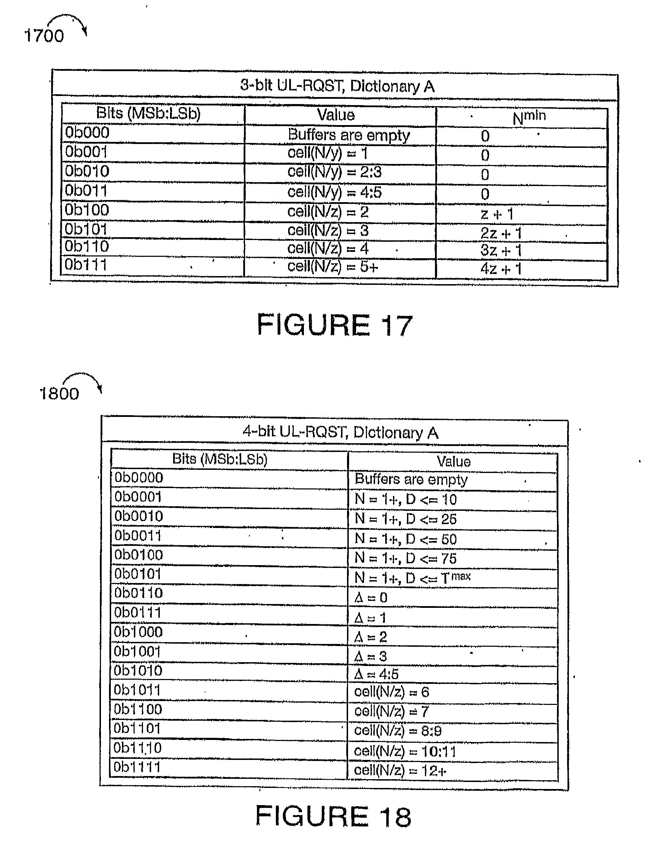

In one illustrative example of a request dictionary, Dictionary A as represented by Table 1700 of Figure 17 and Table 1800 of Figure 18, the WT only transmits total backlog information in the 3-bit report. The 4-bit report, on the other hand is used to transmit either delay information or total backlog information. In this exemplary embodiment, the 3-bit report depends on two control factors, y and z, which, in turn, depend on a previous power report, e.g., the last reported uplink DCCH backoff report, x, and a previous interference report, e.g., the last reported beacon ratio report, *b_{actual}.* The WT then calculates b, the "adjusted generic beacon ratio", to be equal to *b_{actual} -* BEACON_RATIO_OFFSET. Finally, let Rₘₐₓ be the maximum rate option that the WT can support, and Nₘₐₓ be the number of MAC frames corresponding to that rate option. An example of determining exemplary control factors is shown in Table 1600. In Table 1600, first column 1602 lists various test conditions; second column 1604 lists corresponding values for control factor y for each condition; third column 1606 lists corresponding values for control factor z corresponding for each condition. In Table 1600, given x and b, the values of *y* and z should be taken as those from the first row, proceeding from top to bottom, for which the condition in the first column is satisfied.

In the 4-bit report of the format of table 1800 of Figure 18, the WT transmits the time remaining to deadline information D whenever D < T^{max}. For example, T^{max} = 100ms. Otherwise, it transmits backlog information. Define Δ= $⌈ \frac{N - {N}^{min}}{y} ⌉ ,$ where *N*^{min} is determined based on the value of *N* at the time of the last 3-bit report, using Table 1700 of Figure 17.

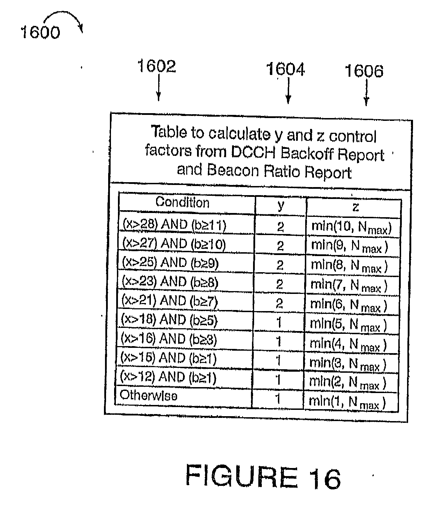

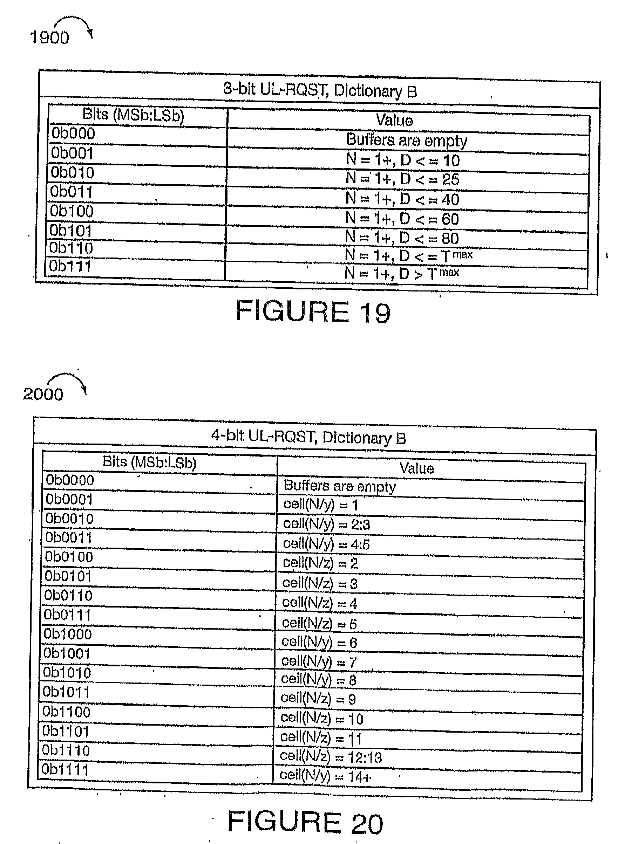

In yet another illustrative example of a request dictionary, Dictionary B represented by table 1900 of Figure 19 and Table 2000 of Figure 20, the WT transmits delay information in the 3-bit report using the format of table 1900 of Figure 19. The 4-bit report with format of table 2000 of Figure 20, on the other hand is used to transmit total backlog information. The control factors y and z used for the 4-bit report are determined from DCCH backoffs and adjusted beacon ratio report in a manner described above with regard to Table 1600 of Figure 16.

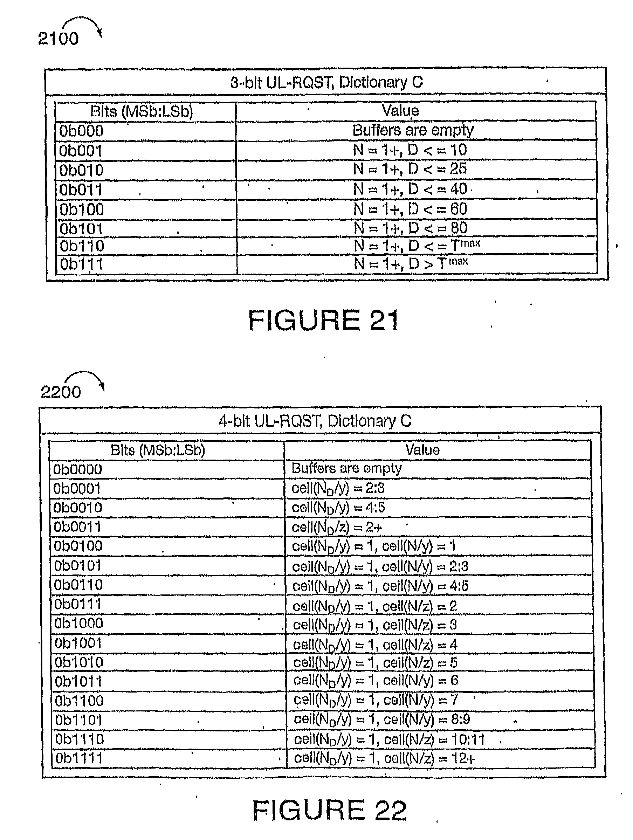

In yet another illustrative example of a request dictionary, Dictionary C represented by table 2100 of Figure 21 and table 2200 of Figure 22, the WT - as in Dictionary B above - transmits delay information in the 3-bit report using the format of table 2100 of Figure 21. However, in the 4-bit report with the format of table 2200 of Figure 22, the WT can transmit either the total backlog information or the number of frames. N_{D}, with time remaining to deadline <= D^{max}. D^{max}, for example could equal 50ms. In yet another example, D^{max} could equal T^{max}.

The examples above illustrate that several request dictionaries can be constructed where request reports, e.g., the 3-bit and/or 4-bit request reports, contain one or more of the following: (1) delay information, (2) total backlog information, (3) backlog information for some of the traffic flows, (4) total backlog with time remaining to deadline less than some value N_{D}, and (5) a refinement of the request information carried in a previous report, e.g., the previous 3-bit request report, 4-bit request report or the previous request report.

In an exemplary wireless communications system, e.g., an exemplary OFDM system, in addition to or in place of providing delay information to the BS using request reports, e.g., request reports as part of request dictionaries, as illustrated above, the WT could transmit delay information using separate delay information reports. In some such embodiments, a flexible report, e.g., a flexible dedicated control channel (DCCH) report, could be used. With the flexible report, the wireless terminal selects the type of report to send in the reporting opportunity allocated to the flexible report. For example, an exemplary 4-bit flexible report could, contain one or more of the following: (1) delay information, (2), total backlog with time remaining to deadline less than some value N_{D}, and (3) a refinement of the request information carried in a previous report, e.g., the previous 3-bit or 4-bit UL-RQST report or the previous UL-RQST report.

Note that the bit sizes for the request reports in the examples above, e.g., 1 bit, 3 bit, 4 bit, are exemplary, and in other embodiments, different bit size request reports may be used. Figures 12 and 13 provide two examples of exemplary delay information report formats. Figure 15 describes a flexible report format that may be used to convey delay information during some times and is used to carry other information during other times.

Another exemplary embodiment shall be described which uses three different bit size request reports for uplink traffic, ULRQST1, ULRQST3 and ULRQST4, and which supports the communication of delay information.

The WT uses an ULRQST1, ULRQST3 or ULRQST4 to report the status of the MAC frame queues at the WT transmitter.

The WT transmitter maintains MAC frame queues, which buffers the MAC frames to be transmitted over the link. The MAC frames are converted from the LLC frames, which are constructed from packets of upper layer protocols. Any packet shall belong to one of 16 streams. If the packet belongs to one stream, then all the MAC frames of that packet also belong to that stream.

The WT reports the number of MAC frames in the 16 streams that the WT may intend to transmit. In the ARQ protocol, those MAC frames shall be those marked as "new" or "to be retransmitted". The WT should maintain two vectors of sixteen elements N[0:15] and D[0:15], and shall maintain three scalars N_{T}, N_{D}, and Dₘᵢₙ: for k=0:15, N[k] represents the number of MAC frames that the WT intends to transmit in stream k, while D[k] represents the minimum time remaining to transmission deadline for the packets that the WT intends to transmit in stream k. Furthermore, ${D}_{min} = {min}_{\left\{k=0:15\right\}} ⁢ D \left[k\right] ,$ ${N}_{T} = N \left[0\right] + N \left[1\right] + N \left[2\right] + … + N \left[15\right] ,$ ${N}_{D} = number of MAC frames with time remaining to transmission deadline \leq {T}_{M} .$

For example, T_{M} = 20ms. The WT should report information about N_{T}, N_{D}, and Dₘᵢₙ to the base station sector so that the base station sector can utilize the information in an uplink (UL) scheduling algorithm to determine the assignment of uplink traffic channel (UL.TCH) segments.

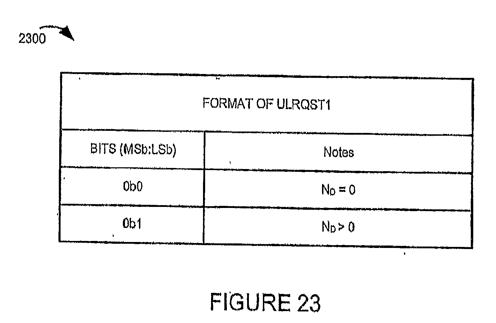

The WT uses an ULRQST1 to report N_{D} according to Table 2300 of Figure 23.

. Let D denote the minimum time remaining, in milliseconds, to the scheduling deadline for all packets in the WT's queues. Let N denote the total backlog at the WT. Using these notations, the 3-bit and 4-bit reports are as follows.

. The WT uses ULRQST3 or ULRQST4 to report one or more of N_{T}, N_{D}, or Dₘᵢₙ according to a request dictionary. A request dictionary is identified by a request dictionary (RD) reference number. At a given time, the WT uses only one request dictionary. When the WT just enters the ACTIVE state, the WT uses the default request dictionary. To change the request dictionary, the WT and the base station sector uses an upper layer configuration protocol. When the WT migrates from the ON state to the HOLD state, the WT keeps the last request dictionary used in the ON state so that when the WT migrates from the HOLD state to the ON state later, the WT continues use the same request dictionary until the request dictionary is explicitly changed. However, if the WT leaves the ACTIVE state, then the memory of the last request dictionary used shall be cleared.

The request dictionaries show that any given instance of a ULRQST3 or ULRQST4 report may not completely contain the actual values of N_{T}, N_{D}, or Dₘᵢₙ. A report is in effect a quantized version of the actual values of N_{T}, N_{D}, or Dₘᵢₙ. A general guideline is that the WT should send a report to minimize the discrepancy between the reported and actual values of N_{T}, N_{D}, or Dₘᵢₙ. However, the WT has the flexibility of determining a report to benefit the WT the most. For example, when the WT is using request dictionary 0, the WT may use ULRQST4 to report N_{T} in some cases and N_{D} in others. Furthermore, in instances where the WT reports N_{T}, it may not automatically imply that N_{D} = 0.

To determine ULRQST3 or ULRQST4, the WT first calculates the following two parameter, y and z, e.g., in accordance with table 1600 of Figure 16 and then uses one of the following dictionaries. Denote by x the value (in dB) of the most recent ULTXBKF5 report, and by b₀ the value (in dB) of the most recent generic DLBNR4 report. An exemplary range for x is 6.5dB to 40 dB. An exemplary range for b₀ is -3dB to 26 dB. The WT further determines an adjusted generic DLBNR4 report value b as follows: b = b₀ - ulTCHrateFlashAssignmentOffset, where minus is defined in the dB sense. Given x and b, the WT determines y and z as those from the first row in table 1600 of Figure 16 for which, the condition in the first column is.satisfied. For example, if x = 17 and b = 1, then z = min(3, Nₘₐₓ) and y = 1. Denote Rₘₐₓ the highest rate option that the WT can support, and Nₘₐₓ the number of MAC frames that can be transmitted in that rate option.

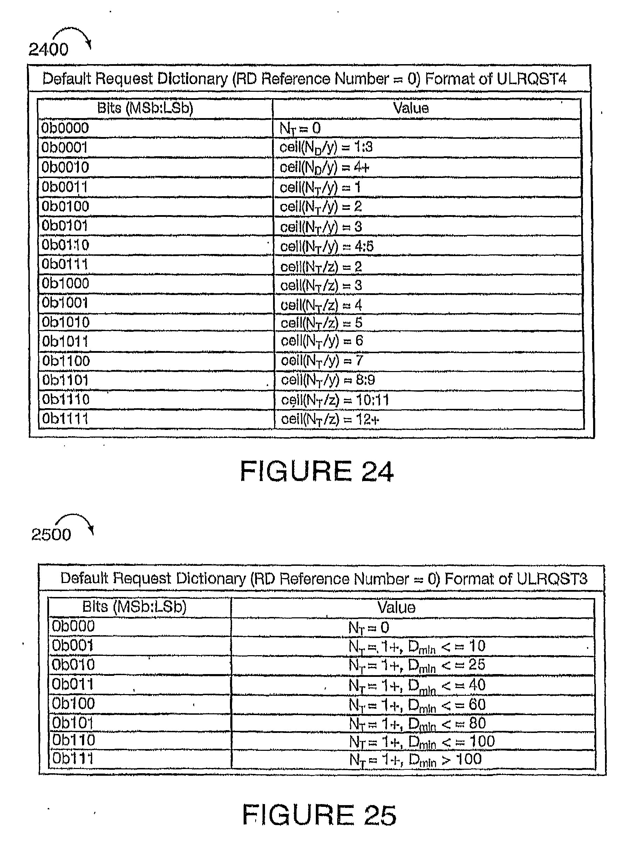

Table 2400 of Figure 24 and Table 2500 of Figure 25 define an exemplary request dictionary with the RD reference number equal to 0.

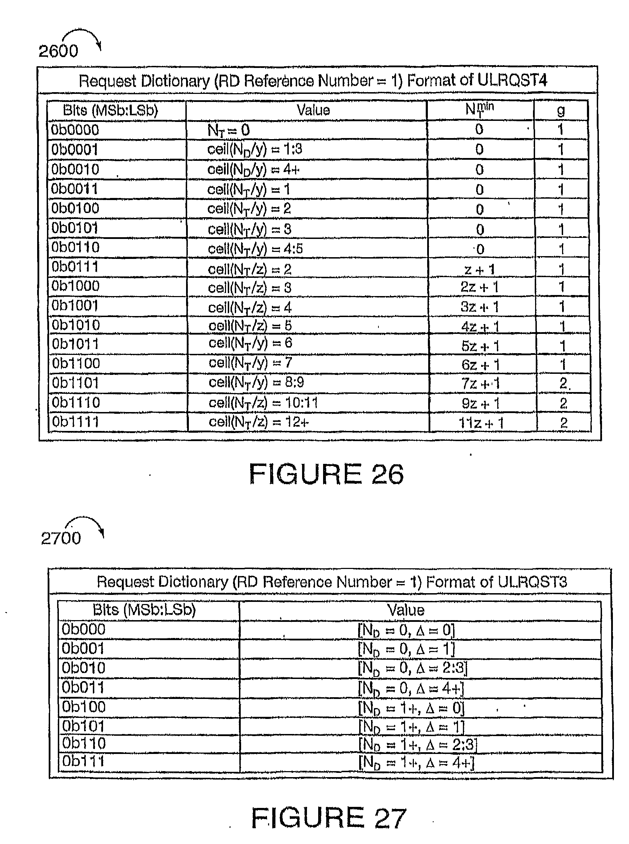

Table 2600 of Figure 26 and Table 2700 of Figure 27 define an exemplary request dictionary with the RD reference number equal to 1.
Define Δ= $⌈ \frac{{N}_{T} - {N}_{T}^{min}}{y * g} ⌉ ,$ where 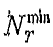 and g are variables determined by the most recent ULRQST4 as per Table 2600 of Figure 26.

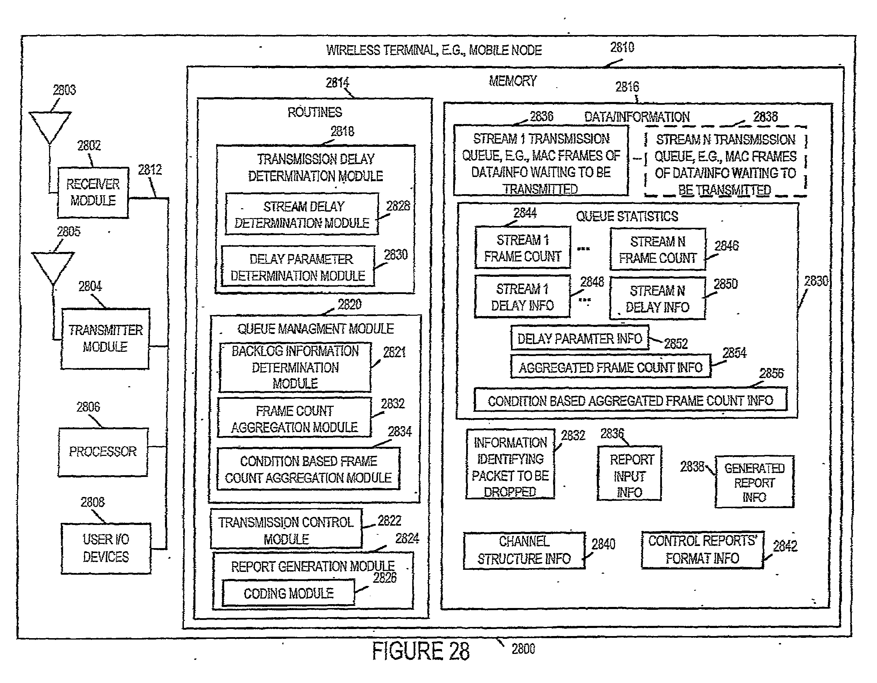

Figure 28 is a drawing of an exemplary wireless terminal 2800, e.g., mobile node, in accordance with various embodiments. Exemplary wireless terminal 2800 may be any of the exemplary wireless terminals (110, 112, 114, 116) of system 100 of Figure 1.

Wireless terminal 2800 includes a receiver module 2802, a transmitter module 2804, a processor 2806, user I/O devices 2808, and a memory 2810 coupled together via a bus 2812 over which the various elements interchange data and information. Memory 2810 includes routines 2814 and data/information 2816. The processor 2806, e.g., a CPU, executes the routines 2814 and uses the data/information 2816 in memory 2810 to control the operation of the wireless terminal 2800 and implement methods.

Receiver module 2802, e.g., an OFDM receiver, is coupled to receive antenna 2803 via which the wireless terminal 2800 receives downlink signals. Downlink signals include assignment signals including assignments of uplink communications resources, e.g., assignment of uplink traffic channel segments. Transmitter module 2804, e.g., an OFDM transmitter, is coupled to transmit antenna 2805, via which the wireless terminal 2800 transmits uplink signals to a base station. Uplink signals include, e.g., control information reports including backlog reports such as, e.g., uplink request reports (ULRQST1, ULRQST3, ULRQST4), power reports, interference reports, etc. Uplink signals also include uplink traffic channel segment signals conveying packets of information from transmission queues. Transmitter module 2804 transmits at least some delay information determined by transmission delay determination module 2818, e.g., communicated as part of an uplink request report and/or transmitted as part of a standalone delay report. In some embodiments, the same antenna is used for receiver and transmitter.

User I/O devices 2808, e.g., microphone, keypad, keyboard mouse, switches, camera, speaker, display, etc., allows a. user of wireless terminal 2800 to input data/information and to access output data/information. User I/O devices 2808 also allow a user of wireless terminal 2800 to control at least some functions of the wireless terminal 2800.

Routines 2814 include a transmission delay determination module 2818, a queue management module 2820, a transmission control module 2822, and a report generation module 2824. Transmission delay determination module 2818 determines delay information corresponding to data to be transmitted, e.g. delay information including a minimum delay to transmission deadline and/or a maximum queuing delay. Transmission delay determination module 2818 includes a stream delay determination module 2828 and a delay parameter determination module 2830. Stream delay determination module 2828 determines individual delay information (stream 1 delay information 2848, ..., stream N delay information 2850) corresponding to one or more transmission streams being maintained by wireless terminal 2800. Delay parameter determination module 2830 determines a delay parameter value 2852 as a function of the individual delay determinations (stream 1 delay into 2848, ... stream N delay info 2850) of stream delay determination module 2828, e.g., a value to be encoded in an uplink request report to communicate delay information.

Queue management module 2820 manages the one or more transmission queues, e.g., transmission queues for uplink traffic corresponding to different transmission streams. Operations of queue management module 2820 include maintaining transmission queues and transmission queue frame count information. Queue management module 2820 controls the dropping of data, e.g., a packet, from a transmission queue if data corresponding to the packet is not transmitted from the transmission queue by a transmission deadline, e.g., associated with the packet. Queue management module 2820 includes a backlog information determination module 2821, a frame count aggregation module 2832 and a condition based frame count aggregation module 2834. Backlog information determination module 2821. determines information indicating an amount of data waiting to be transmitted, e.g., stream 1 frame count information 2844, ..., stream N frame count 2846. Frame count aggregation module 2832 computes an aggregated frame count parameter 2854, e.g., the sum of the frame counts of streams (stream 1 frame count 2844 ...., stream N frame count 2846). Condition based frame count aggregation module 2834 computes an aggregated frame count parameter 2856, e.g., the sum of the frames which satisfy a condition, e.g., the sums of frames with time remaining to a predetermined transmission deadline or the number of frames having been waiting for transmission for a length of time exceeding a predetermined value.

Report generation module 2824 generates control information reports such as uplink reports communicating frame count information and/or delay information. Report generation module 2824 includes coding module 2826. Coding module 326 performs coding operations including jointly coding backlog information, e.g., frame counts of data to be transmitted, and delay information.

Transmission control module 2822 controls the transmitter module 2804 to transmit control information reports including reports communicating delay information, e.g., minimum delay to transmission deadline information and/or maximum queuing delay information.

Data/information 2816 includes one or more transmission queues corresponding to transmission streams (stream 1 transmission queue 2836, ..., stream N transmission queue 2838), queue statistics 2830, information identifying packet(s) to be dropped 2832, report input information 2836, generated report information 2838, channel structure information 2840 and control reports format information 2842.

The transmission queues (2836, ...., 2838) include data, e.g., audio data, image data, text data, file data, etc, to be transmitted by the wireless terminal. Stream 1 transmission queue 2836 includes, e.g., MAC frames of data waiting to be transmitted which have been mapped to transmission stream 1. Stream N transmission queue 2838 includes, e.g., MAC frames of data waiting to be transmitted which have been mapped to transmission stream N. Queue statistics 2830 include frame counts corresponding to backlog for each of the transmission streams (stream 1 frame count 2844, .... , stream N frame count 2846). Stream frame count information (2844, ..., 2846) are outputs of backlog information determination module 2821. Queue statistics 2830 also includes delay information associated with the different streams (stream 1 delay information 2848, ..., stream N delay information 2850). Stream delay information (2848, ..., 2850) are outputs of stream delay determination module 2828. Delay parameter information 2852 is an output of delay parameter determination module 2830, which uses the delay information (2848, ..., 2850) as inputs. In one embodiment, delay parameter information 2852 is a minimum of values in the set of (2848, ..., 2850), e.g., a minimum delay to transmission deadline value to be communicated. In one embodiment, delay parameter information 2852 is a maximum of values in the set of (2848, ..., 2850), a maximum queue delay value to be communicated. Aggregated frame count information 2854, e.g., a summation of sets of frame counts (streams 1 frame count 2844, ..., stream N frame counts 2846) is an output of frame count aggregation module 2832. Condition based aggregated frame count information 2856 is an output of condition based frame count aggregation module 2834. Typically, the frame count represented by aggregated frame count information 2854 is less than or equal to the frame count represented by aggregated frame count information 2854.

Information identifying a packet to be dropped 2832 is an output of queue management module 2820 and is used to update a transmission queue, e.g., management module 2820 updates stream 1 transmission queue 2836 based on information 2832.

Report input information 2836 includes input information used by report generation module 2824, e.g., information including backlog related information and/or frame count related information to be encoded into an uplink request report. Report input information 2836 includes, e.g., a combination one or more of: delay parameter information 2852, aggregated frame count information 2854 and condition based aggregated frame count information 2856. At different times for the same type of report, in some embodiments, different combinations of input information are used. Generated report information 2838 is an output of report generation module 2824, e.g., a 3 bit bit pattern corresponding to an ULRQST3 or a 4 bit bit pattern corresponding to an ULRQST4 report using a particular request dictionary format, e.g., format or request dictionary with reference 0 or request dictionary with reference 1 of Figures 24-27.

. Channel structure information 2840 includes, e.g., uplink dedicated control channel structure information identifying locations in a recurring structure for communicating delay information and/or backlog-information. Figures 10, 11 and 12 include exemplary information that may be included as part of channel control structure information. Control reports' format information 2842 include bit mapping definition information corresponding to control information reports including delay information reports, backlog information reports, and combination delay/backlog reports. Figures 13, 14, 15, 17, 18, 19, 20, 21, 22, 23, 24, 25, 26 and 27 provide information used to describe some exemplary reporting formats.

In one exemplary embodiment corresponding to wireless terminal 2800, there are 16 transmission streams with corresponding queues (2836, ..., 2838). Consider that the channel structure information includes information of Figure 10, 11 and 12, and that control reports' format information includes information of Figures 23-27. The WT reports the number of MAC frames in the 16 streams that the WT may intend to transmit. The WT maintains two vectors of sixteen elements N[0:15] (info 2844, ..., info 2846) and D[0:15] (info 2848, ..., 2850), and maintains three scalars N_{T} (info 2854), N_{D} (info 2856), and Dₘᵢₙ (2852). For k=0:15, N[k] represents the number of MAC frames that the WT intends to transmit in stream k, while D[k] represents the minimum time remaining to transmission deadline for the packets that the WT intends to transmit in stream k. Furthermore, ${D}_{min} \left(info 2852\right) = {min}_{\left\{k=0:15\right\}} ⁢ D \left[k\right] ,$ ${N}_{T} \left(info 2854\right) = N \left[0\right] + N \left[1\right] + N \left[2\right] + … + N \left[15\right] ,$ ${N}_{D} \left(info 2856\right) = number of MAC frames with time remaining to transmission deadline \leq {T}_{M} .$

For example, T_{M} = 2.0ms. The WT should report information about N_{T}, N_{D}, and Dₘᵢₙ to the base station sector so that the base station sector can utilize the information in an uplink (UL) scheduling algorithm to determine the assignment of uplink traffic channel (UL.TCH) segments.

In another exemplary embodiment of wireless terminal 2800, maximum-queuing delay information is determined and used instead of or in addition to minimum time to transmission delay deadline information.

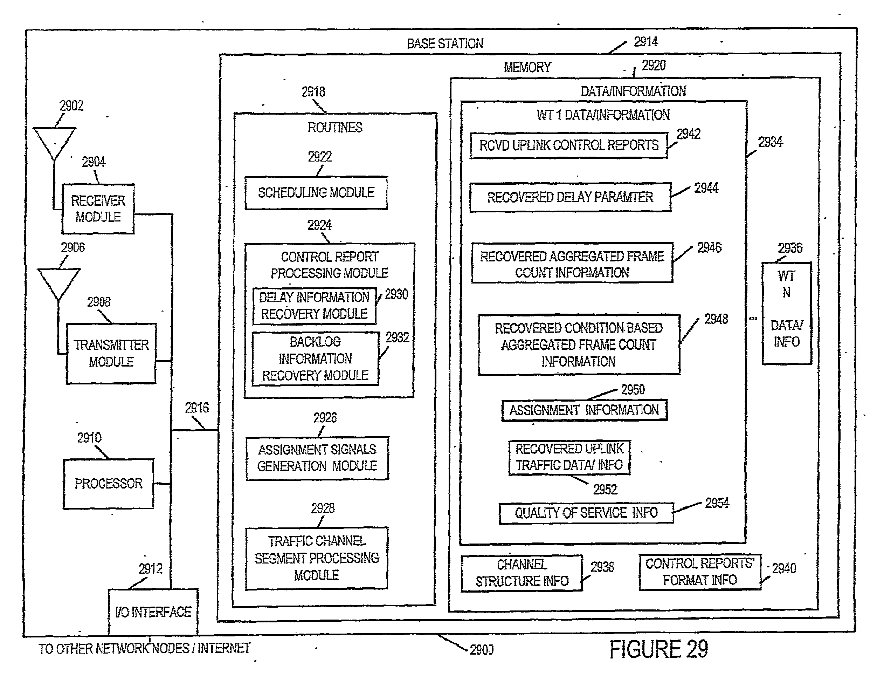

Figure 29 is a drawing of an exemplary base station 2900 in accordance with various embodiments. Exemplary base station 2900 may be any of the exemplary base stations (102, 104) of exemplary system 100 of Figure 1.

Base station 2900 includes a receiver module 2904, a transmitter module 2908, a processor 2910, an I/O interface 2912, and a memory 2914 coupled together via a bus 2916 over which the various elements may interchange data and information. Memory 2914 includes routines 2918 and data/information 2920. The processor 2910, e.g., a CPU, executes the routines 2918 and uses the data/information 2920 in memory 2914 to control the operation of the base station 2900 and implement methods.

Receiver module 2904, e.g., an OFDM receiver, is coupled to receive antenna 2902 via which the base station 2900 receives uplink signals from a plurality of wireless terminals. Uplink signals include, e.g., control information reports such as delay information reports, backlog information reports, and/or reports including jointly coded delay and backlog information. Receiver module 2904 receives delay information from a first wireless terminal, the delay information corresponding to data waiting to be transmitted by the first wireless terminal. The receiver module 2904 also receives additional delay information from at least one additional wireless terminal corresponding to data waiting to be transmitted by the at least one additional wireless terminal. Receiver module 2904 also receives backlog information, e.g., frame count information from said first wireless terminal and said additional wireless terminal. Uplink signals also include traffic channel segment signals from wireless terminals conveying WT transmission queue(s) data.

Transmitter module 2908, e.g., an OFDM transmitter, is coupled to transmit antenna 2906 via which the base station transmits downlink signals to wireless terminals. The downlink signals include assignment signals conveying assignments of uplink-traffic channel segments for wireless terminals.

I/O Interface 2912 couples the base station 2900 to other network nodes, e.g., other base stations, routers, AAA nodes, Home agent nodes, etc. and/or the Internet. I/O interface 2912 by coupling base station 2900 to a backhaul network allows a wireless terminal using a base station 2900 attachment point to participate in a communications session with another wireless terminal using a different base station as its point of network attachment.

Routines 2918 include a scheduling module 2922, a control report processing module 2924, an assignment signals generation module 2926, and a traffic channel segment processing module 2928. Scheduling module 2922, e.g., a scheduler, schedules uplink airlink transmission resources, e.g., uplink traffic channel segments, to said first wireless terminal as a function of received delay information corresponding to the first wireless terminal. In some embodiments, the scheduling of uplink transmission resources to said first wireless terminal by the scheduling module 2922 is also performed as a function of received additional delay information corresponding to at least one additional wireless terminal. In some embodiments, the scheduling of uplink transmission resources to said first wireless terminal by the scheduling module 2922 is also performed as a function of received backlog information from the first wireless terminal. In some embodiments, the scheduling of uplink transmission resources to said first wireless terminal by the scheduling module 2922 is also performed as a function of received backlog information from at least one additional wireless terminal. In some embodiments, the scheduling of uplink transmission resources to said first wireless terminal by the scheduling module 2922 is also performed as a function of stored quality of service information corresponding to the first wireless terminal. In some embodiments, the scheduling of uplink transmission resources to said first wireless terminal by the scheduling module 2922 is also performed as a function of stored quality of service information corresponding to at least one additional wireless terminal.

In some embodiments, the a wireless terminal includes a plurality transmissions stream queues; however, the control information reports communicated to the base station 2900 communicate aggregated information with regard to backlog and/or backlog related delay, as opposed to communicating information about individual queues. For example, base station 2900 receives from a wireless terminal a single delay value indicative of the worst delay across a set of set of transmission stream queues being used by the wireless terminal. The base station also received aggregated information regarding backlog counts across the set of set of transmission stream queues being used by the wireless terminal.

Control report processing module 2924 processes received uplink control information reports, e.g., delay information reports, backlog information, reports, and/or combination reports conveying jointly coded delay and backlog information, and recovers the information being communicated, e.g., a maximum queuing delay, a minimum delay to transmission deadline, and/or backlog information such as a queue frame count or a queue delta frame count with respect to a previous report. Control report processing module 2924 includes a delay information recovery module 2930 which extracts delay information from received reports and a backlog information recovery module 2932 which extracts backlog information, e.g., frame count information, from received reports.

Assignment signals generation module 2926 is responsive to scheduling module 2922 decisions and generates assignment signals conveying uplink traffic channel segment assignments directed to identified wireless terminals. Traffic channel segment processing module 2928 recovers uplink traffic channel segment signals from wireless terminals and associates the recovered information, e.g., packets of user data, with the scheduled wireless terminal corresponding to the segment.

. Data/information 2920 includes a plurality of sets of wireless terminal data/information (WT1 data/information 2934, ... WTN data/information 2936), channel structure information 2938 and control reports format information 2940. WT1 data/information 2934 includes received uplink control reports 2942, recovered delay parameter information 2944, recovered aggregated frame count information 2946, recovered condition based frame count information 2948, recovered uplink traffic data/information 2952, assignment information, 2950, and quality of service information 2954. In some embodiments, at least some of the different wireless terminals using base station 2900 have during some interval different quality of service levels.

Received uplink control reports 2942 include various control information reports used by the base station to characterize the wireless terminal, e.g., delay information reports, uplink request reports communicating backlog information, delay information and/or a combination backlog and delay information, interference reports such as beacon ratio reports, power reports such as wireless terminal transmission power backoff reports, self-noise reports, and SNR reports.

Recovered delay parameter information 2944 includes a communicated delay value associated with the wireless terminal, e.g., a maximum delay time waiting in a transmission queue or a minimum time to transmission deadline, e.g., corresponding to an aggregation of delay information from a plurality of transmission stream queues. Recovered aggregated frame count information 2946 indicates transmission backlog information for wireless terminal 1. Recovered condition based aggregated frame count information 2948 indicates transmission backlog information for wireless terminal 1 corresponding to a frame count with respect to a delay consideration, e.g., a count on frames satisfying a predetermined criteria.

Channel structure information 2938 includes, e.g., uplink dedicated control channel structure information identifying locations in a recurring structure for communicating delay information, and/or backlog information. Figures 10, 11 and 12 include exemplary information that may be included as part of channel control structure information 2938. Control reports' format information 2940 includes bit mapping definition information corresponding to various control channel reports such as, e.g., uplink request reports conveying delay information, backlog information, and combination delay/backlog information. Figures 13, 14, 15, 17, 18, 19, 20, 21, 22, 23, 24, 25, 26 and 27 provide information used to describe some exemplary reporting formats.

In one exemplary embodiment corresponding to a wireless terminal 2800, there are 16 transmission streams with corresponding queues (2836, ..., 2838). Consider that the channel structure information includes information of Figure 10, 11 and 12, and that control reports' format information includes information of Figures 23-27. The WT reports the number of MAC frames in the 16 streams that the WT may intend to transmit. The WT maintains two vectors of sixteen elements N[0:15] (info 2844, ..., info 2846) and D[0:15] (info 2848, ..., 2850), and maintains three scalars N_{T} (info 2854), N_{D} (info 2856), and Dₘᵢₙ (2852). For k=0:15, N[k] represents the number of MAC frames that the WT intends to transmit in stream k, while D[k] represents the minimum time remaining to transmission deadline for the packets that the WT intends to transmit in stream k. Furthermore, ${D}_{min} \left(info 2852\right) = {min}_{\left\{k=0:15\right\}} ⁢ D \left[k\right] ,$ ${N}_{T} \left(info 2854\right) = N \left[0\right] + N \left[1\right] + N \left[2\right] + … + N \left[15\right] ,$ ${N}_{D} \left(info 2856\right) = number of MAC frames with time remaining to transmission deadline \leq {T}_{M} .$

For example, T_{M} = 20ms. The WT 2800 reports information about N_{T}, N_{D}, and Dₘᵢₙ to the base station sector of base station 2900 so that the base station sector can utilize the information in an uplink (UL) scheduling algorithm in scheduling module 2922 to determine the assignment of uplink traffic channel (UL.TCH) segments. Recovered delay parameter 2944 is a. recovered Dₘᵢₙ 2852; recovered aggregated frame count information 2946 is a recoved N_{T} 2854, and recovered condition based aggregated frame count information 2948 is a recovered N_{D} 2856.

In another exemplary embodiment of base station 2900, maximum queuing delay information is determined and used instead of or in addition to minimum time to transmission delay deadline information.

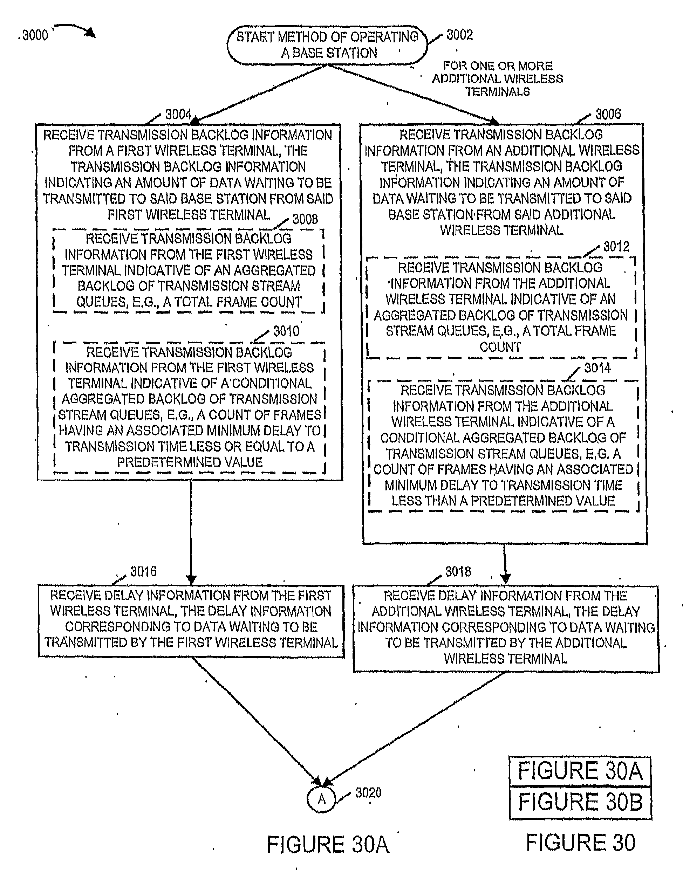

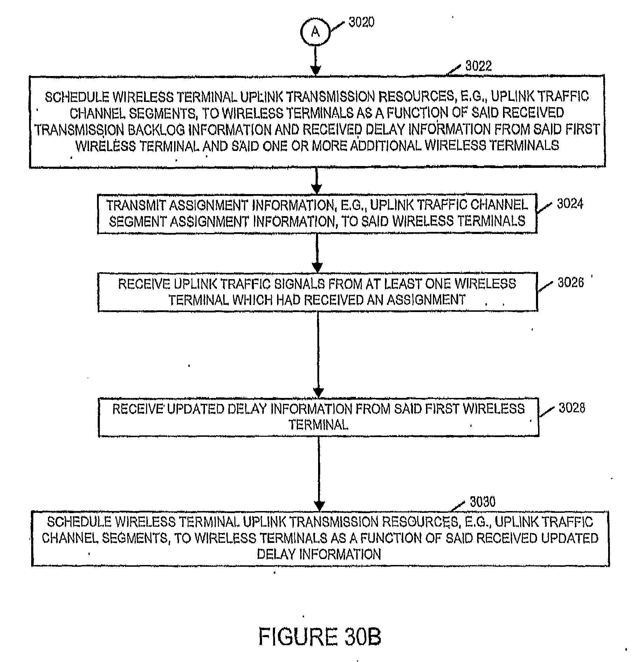

Figure 30 comprising the combination of Figure 30A and Figure 30B is a drawing of a flowchart 3000 of an exemplary method of operating a base station in accordance with various embodiments. The exemplary method starts in step 3002, where the base station is powered on and initialized and proceeds to steps 3004 and 3006. Operation proceeds to step 3006 for each of one or more additional wireless terminals. For example, a plurality of wireless terminals may be in an On-state with respect to a base station and be transmitting control reports to the base station using dedicated control channel resources, at least some of said control reports communicating delay information related to uplink transmission backlog.

In step 3004, the base station receives transmission backlog information from a first wireless terminal, the transmission backlog information indicating an amount of data waiting to be transmitted to said base station from said first wireless terminal. Step 3004 includes one or more of sub-steps 3008 and 3010. In sub-step 3008, the base station receives transmission backlog from the first wireless terminal indicative of an aggregated backlog of transmission stream queues, e.g., a total frame count of uplink traffic backlog. In sub-step 3010,_{'} the base station receives transmission backlog from the first wireless terminal indicative of a conditional aggregated backlog of transmission stream queues, e.g. a count of frames having an associated minimum delay to transmission deadline less than or equal to a predetermined value. Operation proceeds from step 3004 to step 3016.

In step 3006, the base station receives transmissions backlog information from an additional wireless terminal, the transmission backlog information indicating an amount of data waiting to be transmitted to said base station from said additional wireless terminal. Step 3006 includes one or more of sub-steps 3012 and 3014. In sub-step 3012, the base station receives transmission backlog from the additional wireless terminal indicative of an aggregated backlog of transmission stream queues, e.g., a total frame count of uplink traffic backlog. In sub-step 3014, the base station receives transmission backlog from the first wireless terminal indicative of a conditional aggregated backlog of transmission stream queues, e.g., a count of frames having an associated minimum delay to transmission deadline less than or equal to a predetermined value. Operation proceeds from step 3006 to step 3018.

In step 3016, the base station receives delay information from the first wireless terminal, the delay information corresponding to data waiting to be transmitted by the first wireless terminal. For example, the first wireless terminal may determine for each of one or more transmission streams, a minimum time to transmission deadline, and communicate a delay value which is the minimum of the set of individual determined minimum time to transmission deadline values. As another example, the first wireless terminal may determine for each of one or more transmission streams, a maximum queue delay time, and communicate a delay value which is the maximum of the set of individual determined maximum delay values. In various embodiments, the communicated delay value is a quantized representation.

In step 3018, the base station receives delay information from the additional wireless terminal, the delay information corresponding to data waiting to be transmitted by the first wireless terminal. Operation proceeds from steps 3016 and 3018 via connecting node A 3020 to step 3022.

In step 3022, the base station schedules wireless terminal uplink transmission resources, e.g., uplink traffic channel segments, to wireless terminals as a function of said received transmission backlog information and received delay information from said first wireless terminal and said one or more additional wireless terminals. In various embodiments, the base station also uses quality of service level information corresponding to said first wireless terminal and said at least one additional wireless terminal in performing scheduling decisions. Then, in step 3024, the base station transmits assignment information, e.g., uplink traffic channel assignment information to said wireless terminals. Operation proceeds from step 3024 to step 3026.

In step 3026, the base station receives uplink traffic signals from at least one wireless terminal which has received an assignment identifying that the wireless terminal was allocated uplink traffic channel resources. Operation proceeds from step 3026 to step 3028.

In step 3028, the base station receives updated delay information from the first wireless terminal. Then, in step 3030, the base station schedules wireless terminal uplink transmission resources, e.g., uplink traffic channel segments, to wireless terminals as a function of said received updated delay information.

In one exemplary embodiment, the base station, e.g., base station 2900, is receiving uplink request reports from said first wireless terminal and said additional wireless terminal which are using request dictionary with reference number = 0 corresponding to table 2300 of Figure 23, table 2400 of Figure 24 and table 2500 of Figure 25, and the aggregated backlog information is represented by N_{T}, the conditional aggregated backlog information is represented by N_{D}, and the delay information is represented by Dₘᵢₙ. Thus, in some embodiments, the base station maintains sets of information (N_{T}, N_{D}, and Dₘᵢₙ) corresponding to the wireless terminals which are competing for uplink traffic channel resources, and the scheduler 2922 uses that information in making scheduling decisions.

In some embodiments, units other than frame counts are utilized for tracking backlog information, e.g., counts of packets, counts of bits, etc.

While described in the context of an OFDM system, the methods and apparatus of various embodiments, are applicable to a wide range of communications systems including many non-OFDM and/or non-cellular systems.

In various embodiments nodes described herein are implemented using one or more modules to perform the steps corresponding to one or more methods, for example, signal processing, delay determination, frame count determinations, aggregation of information, queue management, report generation, encoding, report communication. In some embodiments various features are implemented using modules. Such modules may be implemented using software, hardware, or a combination of software and hardware. Many of the above described methods or method steps can be implemented using machine executable instructions, such as software, included in a machine readable medium such as a memory device, e.g., RAM, floppy disk, etc. to control a machine, e.g., general, purpose computer with or without additional hardware, to implement all or portions of the above described methods, e.g., in one or more nodes. Accordingly, among other things, various embodiments are directed to a machine-readable medium including machine executable instructions for causing a machine, e.g., processor and associated hardware, to perform one or more of the steps of the above-described method(s).

Numerous additional variations on the methods and apparatus described above will be apparent to those skilled in the art in view of the above descriptions. Such variations are to be considered within scope. The methods and apparatus of various embodiments may be, and in various embodiments are, used with CDMA, orthogonal frequency division multiplexing (OFDM), and/or various other types of communications techniques which, may be used to provide wireless communications links between access nodes and mobile nodes. In some embodiments the access nodes are implemented as base stations which establish communications links with mobile nodes using OFDM and/or CDMA. In various embodiments the mobile nodes are implemented as notebook computers, personal data assistants (PDAs), or other portable devices including receiver/transmitter circuits and logic and/or routines, for implementing the methods of various embodiments.

In the following, further examples are described to facilitate the understanding of the invention:
1. A method of operating a wireless terminal, comprising:
   determining delay information corresponding to data to be transmitted, said delay information including at least a minimum delay to a transmission deadline; and
   communicating at least some of said determined delay information to a base station.
2. The method of 1, wherein said minimum delay to a transmission deadline is a first minimum delay to a first packet transmission deadline, said first minimum delay corresponding to data to be transmitted by the wireless terminal that has been waiting in a first transmission queue.
3. The method of 2, further comprising:
   dropping at least one packet from said first transmission queue if no data is transmitted from said first transmission queue by the transmission deadline.
4. The method of 2, wherein determining delay Information further includes:
   determining a second minimum delay to a second packet transmission deadline, said second minimum delay to a transmission deadline corresponding to data to be transmitted by the wireless terminal that has been waiting in a second transmission queue; and
   wherein communicating at least some of said determined delay information to a base station includes communicating said first and second minimum delays to the base station.
5. The method of 4, wherein said first and second transmission queues correspond to different traffic flows.
6. The method of 4, wherein the first transmission queue corresponds to a voice traffic flow and the second transmission queue corresponds to a non-voice traffic flow.
7. The method of 5, wherein said first minimum delay is reported more frequently than said second minimum delay.
8. The method of 1, further comprising:
   communicating backlog information indicating an amount of data waiting to be transmitted.
9. The method of 8, wherein communicating at least some of said determined delay information includes transmitting said minimum delay in a delay information report transmitted over a wireless communications link; and
   wherein communicating backlog information includes transmitting said backlog information over said wireless communications link in a backlog information report.
10. The method of 8, wherein communicating backlog information indicating an amount of data waiting to be transmitted includes:
   jointly coding frame counts of data to be transmitted and delay information; and
   transmitting the jointly coded information over a wireless communications link.
11. The method of 2, further comprising:
   determining an aggregated backlog value indicating an amount of information corresponding to a plurality of data transmission streams waiting to be communicated.
12. The method of 11, further comprising:
   determining a timing constrained backlog amount indicating an amount of backlog waiting to be transmitted which satisfies a timing constraint.
13. The method of 12, further comprising:
   communicating the determined timing constrained backlog amount to a base station.
14. A wireless terminal, comprising:
   a transmission delay determination module for determining delay information corresponding to data to be transmitted, said delay information including at least a minimum delay to a transmission deadline; and
   a wireless, transmitter module for transmitting at least some delay information determined by said delay determination module.
15. The wireless terminal of 14, further comprising:
   a first transmission queue for storing data to be transmitted;
   memory including queue statistics including said determined delay information which includes said minimum delay to a transmission deadline, said minimum delay to a transmission deadline being a first minimum delay to,a first packet transmission deadline, said first minimum delay corresponding to data to be transmitted by the wireless terminal that has been waiting in the first transmission queue.
16. The wireless terminal of 15, further comprising:
   a queue management module for dropping at least one packet from said first transmission queue if no data is transmitted from said first transmission queue by the transmission deadline.
17. The wireless terminal of 15, further comprising:
   a second transmission queue for storing data to be transmitted; and
   wherein said queue statistics including said determined delay information further include a second minimum delay to a second packet transmission deadline, said second minimum delay to a transmission deadline corresponding to data to be transmitted by the wireless terminal that has been waiting in the second transmission queue; and
   wherein said wireless transmitter is for transmitting said first and second minimum delays to the base station.
18. The wireless terminal of 15, wherein said first and second transmission queues correspond to different traffic flows,
19. The wireless terminal of 18, wherein the first transmission queue corresponds to a voice traffic flow and the second transmission queue corresponds to a non-voice traffic flow.
20. The wireless terminal of 18, further comprising:
   a transmission control module for controlling the transmitter to transmit said first minimum delay to transmission deadline more frequently than said second minimum delay to transmission deadline.
21. The wireless terminal of 15, further comprising:
   a backlog information generation module for generating information indicating an amount of data waiting to be transmitted.
22. The wireless terminal of 21, further comprising:
   a coding module for jointly coding frame counts of data to be transmitted and delay information.
23. The wireless terminal of 14, further comprising:
   a data unit count aggregation module for determining a total amount of data waiting to be transmitted, said data corresponding to a plurality of different data transmission streams.
24. The wireless terminal of 14, further comprising:
   a constrained data unit count module for determining an amount of data waiting to be transmitted that satisfies a transmission timing constraint.
25. A wireless terminal, comprising:
   a transmission delay determination means for determining delay information corresponding to data to be transmitted, said delay information including at least a minimum delay to a transmission deadline; and
   a wireless transmitter means for transmitting at least some delay information determined by said delay determination module.
26. The wireless terminal of 25, further comprising:
   first transmission queue means for storing data to be transmitted; and
   memory means for storing queue statistics including said determined delay information which includes said minimum delay to a transmission deadline, said minimum delay to a transmission deadline being a first minimum delay to a first packet transmission deadline, said first minimum delay corresponding to data to be transmitted by the wireless terminal that has been waiting in the first transmission queue.
27. The wireless terminal of 26, further comprising:
   a queue management means for dropping at least one packet from said first transmission queue if no data is transmitted from said first transmission queue by the transmission deadline.
28. The wireless terminal of 26, further comprising:
   second transmission queue means for storing data to be transmitted; and
   wherein said queue statistics including said determined delay information further include a second minimum delay to a second packet transmission deadline, said second minimum delay to a transmission deadline corresponding to data to be transmitted by the wireless terminal that has been waiting in the second transmission queue.
29. The wireless terminal of 26, wherein said first and second transmission queue means correspond to different traffic flows.
30. The wireless terminal of 29, further comprising:
   a transmission control means for controlling the transmitter to transmit said first minimum delay more frequently than said second minimum delay; and
   a backlog information generation means for generating information indicating an amount of data waiting to be transmitted.
31. A computer readable medium embodying machine executable instructions for controlling a wireless terminal to implement a method, the method comprising:
   determining delay information corresponding to data to be transmitted, said delay information including at least a minimum delay to a transmission deadline; and
   communicating at least some of said determined delay information to a base station.
32. The computer readable medium of 31, wherein said minimum delay to a transmission deadline is a first minimum delay to a first packet transmission deadline, said first minimum delay corresponding to data to be transmitted by the wireless terminal that has been waiting in a first transmission queue.
33. The computer readable medium of 32, further embodying machine executable instructions for:
   dropping at least one packet from said first transmission queue if no data is transmitted from said first transmission queue by the transmission deadline.
34. The computer readable medium of 32, further embodying machine executable instructions for:
   determining a second minimum delay to a second packet transmission deadline, said second minimum delay to a transmission deadline corresponding to data to be transmitted by the wireless terminal that has been waiting in a second transmission queue, as part of said step of determining delay information; and
   communicating said first and second minimum delays to the base station, as part of said step of communicating at least some of said determined delay information to a base station.
35. The computer readable medium of 34, wherein said first and second transmission queues correspond to different traffic flows.
36. A device comprising:
   a processor configured to:
      determine delay information corresponding to data to be transmitted, said delay information including at least a minimum delay to a transmission deadline; and
      communicate at least some of said determined delay information to a base station.
37. The device of 36, wherein said minimum delay to a transmission deadline is a first minimum delay to a first packet transmission deadline, said first minimum delay corresponding to data to be transmitted by the wireless terminal that has been waiting in a first transmission queue.
38. The device of 37, wherein said processor is further configured to:
   drop at least one packet from said first transmission queue if no data is transmitted from said first transmission queue by the transmission deadline.
39. The device of 37, wherein said processor is further configured to:
   determine a second minimum delay to a second packet transmission deadline, said second minimum delay to a transmission deadline corresponding to data to be transmitted by the wireless terminal that has been waiting in a second transmission queue as part of said step of determining delay information; and
   communicates said first and second minimum delays to the base station, as part of said step of communicating at least some of said determined delay information to a base station.
40. The device of 39, wherein said first and second transmission queues correspond to different traffic flows.

## Claims

1. A method (800) of operating a wireless terminal, comprising:
determining (804; 806; 808) delay information corresponding to data to be transmitted, said delay information (342; 344) including at least a minimum delay to a transmission deadline; and
communicating (810) at least some of said determined delay information (342) to a base station (400);
wherein said minimum delay to a transmission deadline is a first minimum delay (346) to a first packet transmission deadline, said first minimum delay (346) corresponding to data to be transmitted by the wireless terminal (300) that has been waiting in a first transmission queue (328);
wherein determining (804) delay information (342; 344) further includes:
determining (808) a second minimum delay (350) to a second packet transmission deadline, said second minimum delay (350) to a transmission deadline corresponding to data to be transmitted by the wireless terminal (300) that has been waiting in a second transmission queue (330);
wherein communicating at least some of said determined delay information (342; 344) to a base station (400) includes communicating said first and second minimum delays (346; 350) to the base station (400);
wherein said first and second transmission queues (328; 330) correspond to different traffic flows;
wherein said first minimum delay (346) is reported more frequently than said second minimum delay (350).

2. The method (800) of claim 1, further comprising:
dropping at least one packet from said first transmission queue if no data is transmitted from said first transmission queue by the transmission deadline.

3. The method (800) of claim 1, wherein the first transmission queue corresponds to a voice traffic flow and the second transmission queue corresponds to a non-voice traffic flow.

4. The method (800) of claim 1, further comprising:
communicating backlog information indicating an amount of data waiting to be transmitted.

5. The method (800) of claim 4, wherein communicating at least some of said determined delay information includes transmitting said minimum delay in a delay information report transmitted over a wireless communications link; and
wherein communicating backlog information includes transmitting said backlog information over said wireless communications link in a backlog information report.

6. The method (800) of claim 4, wherein communicating backlog information indicating an amount of data waiting to be transmitted includes:
jointly coding frame counts of data to be transmitted and delay information; and
transmitting the jointly coded information over a wireless communications link.

7. The method (800) of claim 1, further comprising:
determining an aggregated backlog value indicating an amount of information corresponding to a plurality of data transmission streams waiting to be communicated.

8. The method (800) of claim 7, further comprising:
determining a timing constrained backlog amount indicating an amount of backlog waiting to be transmitted which satisfies a timing constraint.

9. The method (800) of claim 8, further comprising:
communicating the determined timing constrained backlog amount to a base station.

10. A wireless terminal (300), comprising:
a transmission delay determination means (318) for determining delay information (342; 344) corresponding to data to be transmitted, said delay information including at least a minimum delay (346; 350) to a transmission deadline; and
a wireless transmitter means (304) for transmitting at least some delay information (342; 344) determined by said transmission delay determination means (318);
first transmission queue means (328) for storing data to be transmitted; and
memory means (310) for storing queue statistics including said determined delay information (342; 344) which includes said minimum delay to a transmission deadline, said minimum delay to a transmission deadline being a first minimum delay (346) to a first packet transmission deadline, said first minimum delay (346) corresponding to data to be transmitted by the wireless terminal (300) that has been waiting in the first transmission queue (328);
second transmission queue means (330) for storing data to be transmitted;
wherein said queue statistics including said determined delay information further include a second minimum delay (350) to a second packet transmission deadline, said second minimum delay (350) to a transmission deadline corresponding to data to be transmitted by the wireless terminal (300) that has been waiting in the second transmission queue (330);
wherein said first and second transmission queue means (328; 330) correspond to different traffic flows;
wherein said wireless transmitter means (304) is adapted to report said first minimum delay (346) more frequently than said second minimum delay (350).

11. The wireless terminal (300) of claim 10, further comprising:
a queue management means (320) for dropping at least one packet from said first transmission queue if no data is transmitted from said first transmission queue by the transmission deadline.

12. The wireless terminal (300) of claim 10, further comprising:
a transmission control means (322) for controlling the transmitter to transmit said first minimum delay (346) more frequently than said second minimum delay (350); and
a backlog information generation means (324) for generating information indicating an amount of data waiting to be transmitted.

13. The wireless terminal (300) of claim 10, wherein the first transmission queue (328) corresponds to a voice traffic flow and the second transmission queue (330) corresponds to a non-voice traffic flow.

14. The wireless terminal (300) of claim 10, further comprising:
a coding module for jointly coding frame counts of data to be transmitted and delay information

15. A computer program for implementing a method according to any of claims 1 to 9.
